# EUROPEAN PATENT SPECIFICATION

(11) **EP 4 411 442 B1**
(45) Date of publication and mention of the grant of the patent: **04.11.2026**
(21) Application number: 21959259.9
(22) Date of filing: 28.09.2021
(51) Int. Cl.: G02B 6/38

(54) **OPTICAL CONNECTOR CONNECTION STRUCTURE**
VERBINDUNGSSTRUKTUR FÜR OPTISCHEN STECKER
STRUCTURE DE CONNEXION DE CONNECTEUR OPTIQUE

(43) Date of publication of application: 07.08.2024
(73) Proprietor: NTT, Inc., Tokyo 100-8116 (JP)
(72) Inventor: SHIKAMA, Kota, Musashino-shi, Tokyo 180-8585 (JP); ISHII, Yuzo, Musashino-shi, Tokyo 180-8585 (JP); NAGASE, Ryo, Musashino-shi, Tokyo 180-8585 (JP); SATO, Norio, Musashino-shi, Tokyo 180-8585 (JP)
(74) Representative: Samson & Partner Patentanwälte mbB
(86) International application number: PCT/JP2021/035657
(87) International publication number: WO 2023/053211

(56) References cited:
- WO-A1-2021/111589
- WO-A1-2021/111773
- WO-A1-2021/172551
- JP-A- S60 164 709
- US-A1- 2006 093 273
- US-A1- 2011 136 350
- US-A1- 2014 120 746
- US-A1- 2017 332 895

## Description

### [Technical Field]

The present invention relates to a technique for connecting optical connectors to each other, and more particularly to an optical connector connection structure which is excellent in attachment and detachment characteristics while using a magnetic force.

### [Background Art]

In accordance with growing needs for optical interconnects in a data center, needs for multicore optical connectors represented by MT connectors and MPO connectors are increasing. In both of the MT connectors and the MPO connectors, connection end faces of opposing ferrules are positioned by fitting pins. Also, when single mode fibers are connected to each other using the MT connectors, a matching material is used between the connection end faces of the ferrules. When single mode fibers are connected to each other using the MPO connectors, physical contact (PC) connection is performed in which the connection end faces of the ferrules are made to be oblique end faces and the connection end faces are pressed against each other by applying a pressing force of about 10 to 20 N**.**

In both of the MT connectors and the MPO connectors, a pressing mechanism using a mechanical element such as a spring or a clip is used for pressing the connection end faces of the ferrules and holding the connection state. However, there is a limit to miniaturization of the connectors due to space limitations for holding mechanical elements or attaching and detaching the mechanical elements.

As a means for realizing miniaturization, an optical connector has been proposed in which a mechanical element such as a spring or a clip is eliminated, magnets are attached to peripheries of ferrules, and the ferrules are pressed against each other by a magnetic force generated from the magnets (see NPL 1).

However, in the configuration using magnets, the connection between connection end faces of the ferrules and the connection between the magnets attached to the ferrules occur simultaneously, and thus, there is a problem that attachment and detachment of the optical connector is difficult. That is, in a case in which a magnetic attraction force of, for example, about 10 N is applied between optical connectors, it is necessary to apply a force larger than the magnetic attraction force in a direction opposite to the magnetic attraction force when two connected optical connectors are separated from each other, and the connection is difficult to release. Further, there is a possibility that a guide pin or the like may be deformed when the optical connectors are separated from each other. In addition, even when two optical connectors are connected to each other, a large magnetic attraction force is generated between the optical connectors, and thus there is a possibility that the magnets may collide with each other vigorously, and the magnets be chipped.

### [Citation List]

WO 2021/111773 A1 relates to optical connection components and optical connection structures using magnetic structures.

WO 2021/172551 A1 relates to further examples of optical fiber connectors.

### [Non Patent Literature]

[NPL 1] Kota Shikama, Norio Sato, Atsushi Aratake, Satoshi Shigematsu, and Takeshi Sakamoto, "Miniature Optical Connector with Magnetic Physical Contact", Proc. Optical fiber communication Conference 2020, W2A

### [Summary of Invention]

### [Technical Problem]

The present invention has been made to solve the above problems, and an object of the present invention is to provide an optical connector connection structure in which workability of attachment and detachment of an optical connector can be improved.

### [Solution to Problem]

According to the present invention, optical connector connection structure according to the appended independent claims are provided. The dependent claims relate to preferred embodiments.

An optical connector connection structure of the present invention includes a first optical connector attached to a tip of a first optical fiber and a second optical connector attached to a tip of a second optical fiber and connectable to the first optical connector, wherein the first optical connector includes a first alignment component configured to fix the first optical fiber and a first magnetic structure integrated with the first alignment component, the second optical connector includes a second alignment component configured to fix the second optical fiber and a second magnetic structure integrated with the second alignment component, the first magnetic structure is made of a soft magnetic material, the second magnetic structure is made of a soft magnetic material having a length shorter in a longitudinal direction of the optical fiber than that of the first magnetic structure, and a third magnetic structure made of a hard magnetic material is disposed on an end face side opposite to a connection end face of the second magnetic structure with the first magnetic structure.

Also, in one configuration example of the optical connector connection structure of the present invention, the third magnetic structure is made of two or more hard magnetic materials, and the third magnetic structure having a square hollow tube shape obtained by combining these hard magnetic materials is attached to a periphery of the second alignment component.

Also, in one configuration example of the optical connector connection structure of the present invention, the second magnetic structure is made of two or more soft magnetic materials, and the soft magnetic materials are disposed at the periphery of the second alignment component in a form in which they are separated from each other via a gap filled with air or a nonmagnetic material.

Also, one configuration example of the optical connector connection structure of the present invention further includes a fourth magnetic structure made of a soft magnetic material disposed on an end face side opposite to a connection end face of the third magnetic structure with the second magnetic structure.

Also, in one configuration example of the optical connector connection structure of the present invention, the fourth magnetic structure is made of two or more soft magnetic materials, and the fourth magnetic structure having a square hollow tube shape obtained by combining these soft magnetic materials is attached to the periphery of the second alignment component.

Also, in one configuration example of the optical connector connection structure of the present invention, the first and second alignment components and the first and second magnetic structures have positioning structures for determining a positional relationship between the first alignment component and the first magnetic structure and a positional relationship between the second alignment component and the second magnetic structure, respectively.

Also, in one configuration example of the optical connector connection structure of the present invention, the second magnetic structure is integrally molded with the second alignment component.

Also, an optical connector connection structure of the present invention includes a first optical connector attached to a tip of a first optical fiber and a second optical connector attached to a tip of a second optical fiber and connectable to the first optical connector, wherein the first optical connector includes a first alignment component configured to fix the first optical fiber and a first magnetic structure integrated with the first alignment component, the second optical connector includes a second alignment component configured to fix the second optical fiber and a second magnetic structure integrated with the second alignment component, the first and second magnetic structures are made of a soft magnetic material, connection end faces of the first and second alignment components, which are opposed to each other, protrude with respect to connection end faces of the first and second magnetic structures, which are opposed to each other, a third magnetic structure made of a hard magnetic material is disposed such that the first magnetic structure and the second magnetic structure are connected to each other when the first optical connector is connected to the second optical connector, the third magnetic structure is made of two or more hard magnetic materials, and the third magnetic structure having a square hollow tube shape obtained by combining these hard magnetic materials is attached to peripheries of the connection end faces of the first and the second alignment components.

Also, an optical connector connection structure of the present invention includes a first optical connector attached to a tip of a first optical fiber and a second optical connector attached to a tip of a second optical fiber and connectable to the first optical connector, wherein the first optical connector includes a first alignment component configured to fix the first optical fiber and a first magnetic structure integrated with the first alignment component, the second optical connector includes a second alignment component configured to fix the second optical fiber, the first magnetic structure is made of a soft magnetic material, a second magnetic structure is disposed at a periphery of the second alignment component, the second magnetic structure is made of two or more hard magnetic materials, the second magnetic structure having a square hollow tube shape obtained by combining the hard magnetic materials is attached around the second alignment component, and at least one of the second alignment component and the second magnetic structure has a positioning structure for determining a positional relationship between the second alignment component and the second magnetic structure.

### [Advantageous Effects of Invention]

According to the present invention, the first magnetic structure is made of a soft magnetic material, the second magnetic structure is made of a soft magnetic material having a length shorter in the longitudinal direction of the optical fiber than that of the first magnetic structure, and the third magnetic structure made of a hard magnetic material can be mounted on the end face side opposite to the connection end face of the second magnetic structure with the first magnetic structure, whereby the connection between the connection end faces of the first and second alignment components and the attachment of the third magnetic structure can be performed in different processes, and thus workability of the attachment and detachment of the optical connector can be improved.

### [Brief Description of Drawings]

[Fig. 1A] Fig. 1A is a perspective view of a multicore optical connector connection structure according to a first example of the present invention before ferrule connection.
[Fig. 1B] Fig. 1B is a perspective view of the multicore optical connector connection structure according to the first example of the present invention after the ferrule connection.
[Fig. 2] Fig. 2 is a perspective view showing a state in which magnets are attached after the ferrule connection of the multicore optical connector connection structure according to the first example of the present invention.
[Fig. 3A] Fig. 3A is a cross-sectional view of the multicore optical connector connection structure according to the first example of the present invention after the ferrule connection.
[Fig. 3B] Fig. 3B is a cross-sectional view showing a state in which magnets are attached after the ferrule connection of the multicore optical connector connection structure according to the first example of the present invention.
[Figs. 4A and 4B] Figs. 4A and 4B are diagrams for illustrating a method for attaching a third magnetic structure according to the first example of the present invention.
[Figs. 5A and 5B] Figs. 5A and 5B are diagrams for illustrating a method for removing the third magnetic structure according to the first example of the present invention.
[Figs. 6A and 6B] Figs. 6A and 6B are cross-sectional views showing another example of the multicore optical connector connection structure according to the first example of the present invention.
[Figs. 7A to 7C] Figs. 7A to 7C are cross-sectional views for illustrating a method for joining a first magnetic structure and a ferrule according to the first example of the present invention.
[Figs. 8A to 8C] Figs. 8A to 8C are cross-sectional views for illustrating a method for joining a second magnetic structure and a ferrule according to the first example of the present invention.
[Figs. 9A to 9D] Figs. 9A to 9D are diagrams for illustrating a method for positioning the third magnetic structure and a ferrule according to the first example of the present invention.
[Fig. 10A] Fig. 10A is a perspective view of a multicore optical connector connection structure according to a second example of the present invention before ferrule connection.
[Fig. 10B] Fig. 10B is a perspective view of the multicore optical connector connection structure according to the second example of the present invention after the ferrule connection.
[Fig. 11] Fig. 11 is a perspective view showing a state in which magnets are attached after the ferrule connection of the multicore optical connector connection structure according to the second example of the present invention.
[Fig. 12A] Fig. 12A is a cross-sectional view showing magnetic flux density vectors when there is no gap in the second magnetic structure of the multicore optical connector connection structure.
[Fig. 12B] Fig. 12B is a cross-sectional view showing magnetic flux density vectors in the multicore optical connector connection structure according to the second example of the present invention.
[Fig. 13A] Fig. 13A is a perspective view of a multicore optical connector connection structure according to a third example of the present invention before ferrule connection.
[Fig. 13B] Fig. 13B is a perspective view of the multicore optical connector connection structure according to the third example of the present invention after the ferrule connection.
[Fig. 14] Fig. 14 is a perspective view showing a state in which magnets are attached after the ferrule connection of the multicore optical connector connection structure according to the third example of the present invention.
[Fig. 15A] Fig. 15A is a perspective view of a multicore optical connector connection structure according to a fourth example of the present invention before ferrule connection.
[Fig. 15B] Fig. 15B is a perspective view of the multicore optical connector connection structure according to the fourth example of the present invention after ferrule connection.
[Fig. 16] Fig. 16 is a perspective view showing a state in which magnets are attached after the ferrule connection of the multicore optical connector connection structure according to the fourth example of the present invention.

### [Description of Embodiments]

### [First Example]

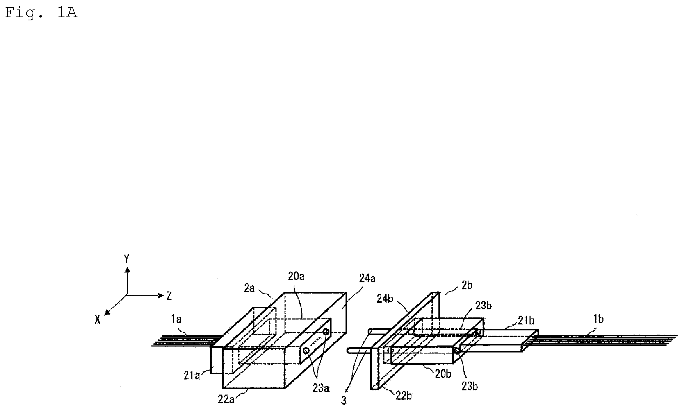

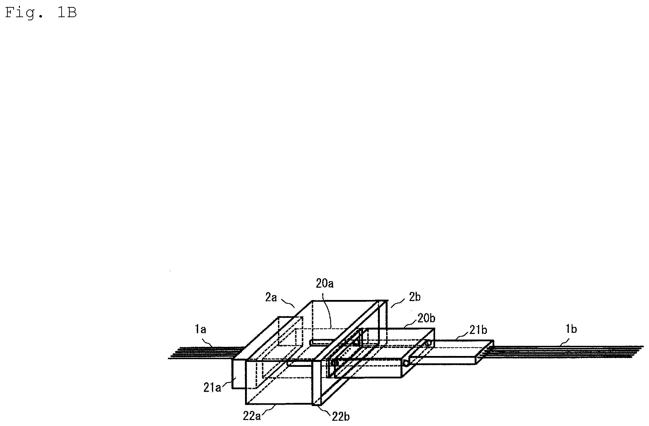

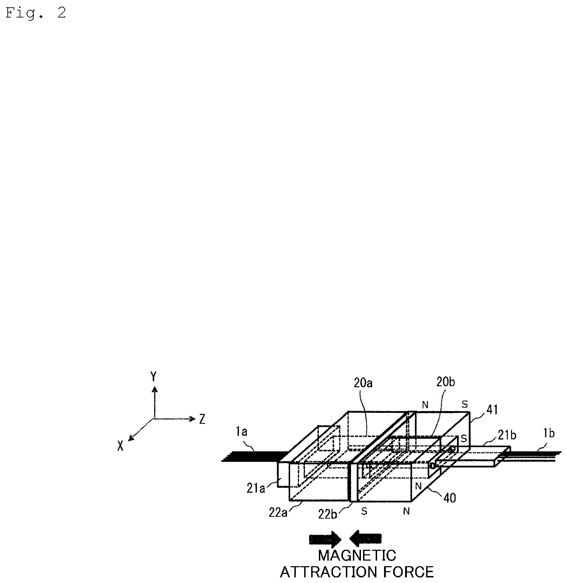

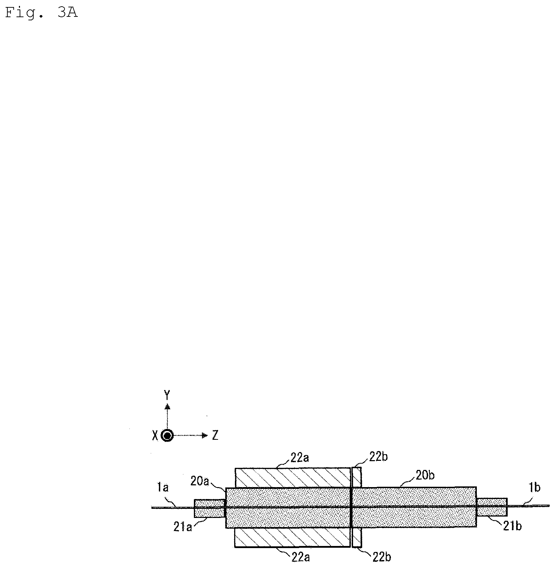

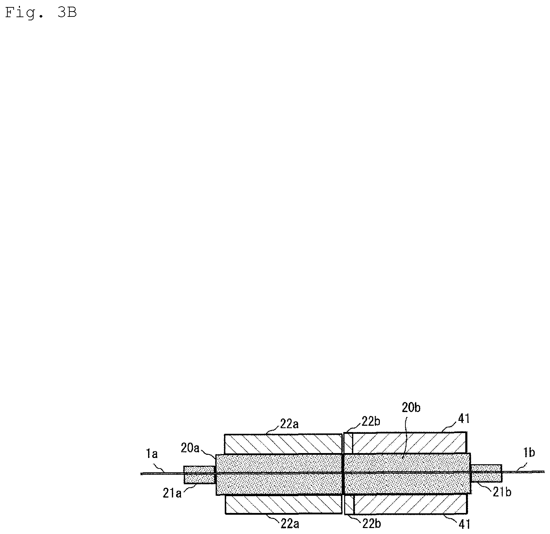

Examples of the present invention will be described in detail with reference to the drawings. Fig. 1A is a perspective view of a multicore optical connector connection structure according to a first example of the present invention before ferrule connection, and Fig. 1B is a perspective view of the multicore optical connector connection structure after the ferrule connection. Fig. 2 is a perspective view showing a state in which magnets are attached after the ferrule connection of the multicore optical connector connection structure. Fig. 3A is a cross-sectional view of the multicore optical connector connection structure of Fig. 1B taken along a YZ plane, and Fig. 3B is a cross-sectional view of the multicore optical connector connection structure of Fig. 2 taken along the YZ plane.

The multicore optical connector connection structure of the present example includes an optical connector 2a attached to tips of a plurality of optical fibers 1a, an optical connector 2b attached to tips of a plurality of optical fibers 1b, and guide pins 3 that connect ferrules of the optical connectors 2a and 2b to each other.

The optical connector 2a includes a ferrule 20a (a first alignment component) attached to the tips of the optical fibers 1a, a boot 21a that bundles the optical fibers 1a, and a magnetic structure 22a (a first magnetic structure) attached to a periphery of the ferrule 20a. Similarly, the optical connector 2b includes a ferrule 20b (a second alignment component) attached to the tips of the optical fibers 1b, a boot 21b that bundles the optical fibers 1b, and a magnetic structure 22b (a second magnetic structure) attached to a periphery of the ferrule 20b.

The optical fibers 1a and 1b are 8-core quartz single mode fibers each having a clad diameter of, for example, 125 µm, a core diameter of about 10 µm and disposed at a pitch of about 250 µm.

The ferrules 20a and 20b are multicore ferrules having a plurality of micro holes into which the plurality of optical fibers 1a and 1b are inserted. The ferrules 20a and 20b are known MT ferrules, and two guide pin holes 23a and 23b penetrating the ferrules 20a and 20b are formed in a longitudinal direction (a Z axis direction) of the optical fibers 1a and 1b.

The optical fibers 1a from which coatings are removed are inserted one by one into the plurality of micro holes of the ferrule 20a. Similarly, the optical fibers 1b from which coatings are removed are inserted one by one into the plurality of micro holes of the ferrule 20b. The optical fibers 1a and 1b and the ferrules 20a and 20b are fixed by adhesives. Also, in Figs. 1A, 1B, 2, 3A, and 3B, illustrations of the adhesives and the optical fiber coatings are omitted.

Opposing connection end faces of the ferrules 20a and 20b, opposing connection end faces of the optical fibers 1a and 1b, and opposing connection end faces 24a and 24b of the magnetic structures 22a and 22b are perpendicular to the Z axis direction.

The optical fibers 1a and 1b are positioned to slightly protrude from the connection end faces of the ferrules 20a and 20b, and the connection end faces of the optical fibers 1a and 1b are polished.

The connection end face 24a of the magnetic structure 22a and the connection end face of the ferrule 20a are positioned to be aligned on the same plane, but the connection end face of the ferrule 20a may be positioned to protrude from the connection end face 24a of the magnetic structure 22a. Similarly, the connection end face 24b of the magnetic structure 22b and the connection end face of the ferrule 20b are positioned to be aligned on the same plane, but the connection end face of the ferrule 20b may be positioned to protrude from the connection end face 24b of the magnetic structure 22b.

A length of the magnetic structure 22b in the Z axis direction is set to be shorter than those of the magnetic structure 22a and the ferrules 20a and 20b. The length of the magnetic structure 22b in the Z axis direction is, for example, about 1 mm. On the other hand, a length of the magnetic structure 22a in the Z axis direction is approximately equal to the lengths of the ferrules 20a and 20b and is, for example, approximately 6 mm.

In the present example, as shown in Figs. 1A and 1B, the guide pins 3 are inserted one by one into the two guide pin holes 23b of the ferrule 20b of the optical connector 2b, these guide pins 3 are inserted into the guide pin holes 23a of the ferrule 20a of the optical connector 2a, the connection end faces of the ferrules 20a and 20b are butted against each other, and the connection end faces of the optical fibers 1a and 1b are butted against each other, thereby connecting the optical connectors 2a and 2b to each other. The positioning of the ferrules 20a and 20b, that is, the positioning of the optical fibers 1a and 1b, is performed by the guide pins 3.

The magnetic structures 22a and 22b are both made of a soft magnetic material. As the soft magnetic material, a metal attracted to a magnet is known, for example, iron, nickel, cobalt, permalloy, and the like. In addition, among stainless steel (SUS), which is an iron-based alloy, magnetic stainless steel (for example, SUS430) can also be used.

For a method for joining the ferrules 20a and 20b and the magnetic structures 22a and 22b, any joining method such as adhesion, mechanical fitting, or metal joining (solder or the like) may be used.

Also, in the present example, magnetic structures 40 and 41 (a third magnetic structure) are disposed on the end face side opposite to the connection end face 24b of the magnetic structure 22b. The magnetic structures 40 and 41 are made of a hard magnetic material (so-called a magnet). When the longitudinal direction of the optical fibers 1a and 1b is defined as the Z axis direction, magnetization directions of N poles and S poles of the magnetic structures 40 and 41 are set in the Z axis direction. For a material of the magnet, any of known magnets may be used depending on a magnetic force to be provided. For a representative magnet, a neodymium magnet can be used. In addition, known magnets such as a ferrite magnet, an alnico magnet, a samarium cobalt magnet, a KS steel, a MK steel, and a neodymium iron boron magnet can be used for the magnetic structures 40 and 41. Also, any of these magnets whose magnetic characteristics are adjusted by slightly changing their composition can be used naturally in the same way.

As shown in Fig. 2, each of the magnetic structures 40 and 41 is made of a hard magnetic material having a half-split structure obtained by dividing a square hollow tube (also referred to as square cylinder) into halves. By combining the magnetic structures 40 and 41 to be formed into a square hollow tube shape, a part of the ferrule 20b can be housed inside the square tube. As described above, the magnetization directions of the N and S poles of the magnetic structures 40 and 41 are set in the Z axis direction, but the magnetization directions of the N and S poles are set to be opposite to each other so that they are integrated by a magnetic attraction force. For example, in the example shown in Fig. 2, the magnetization direction of the magnetic structure 40 is set so that the S pole and the N pole are arranged in order in the Z axis direction from the magnetic structure 22b side, while the magnetization direction of the magnetic structure 41 is set so that the N pole and the S pole are arranged in order in the Z axis direction from the magnetic structure 22b side.

It is not always necessary to integrate the magnetic structures 40 and 41 with the ferrules 20a and 20b. The magnetic structures 40 and 41 are coupled to the magnetic structure 22b by a magnetic attraction force, but are not fixed to the ferrule 20b, and thus they can be freely attached to and detached from each other.

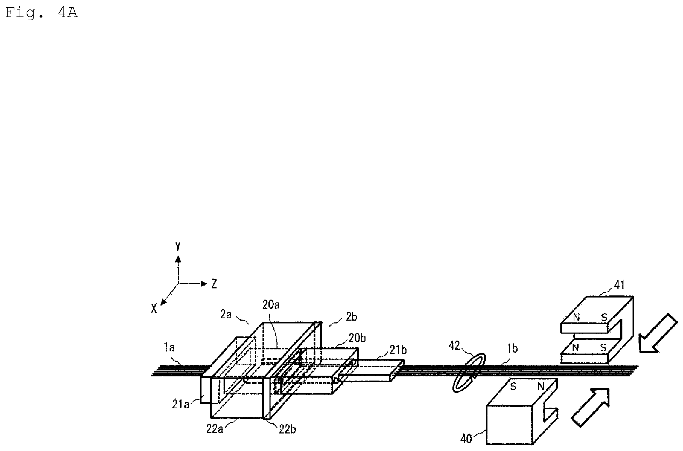

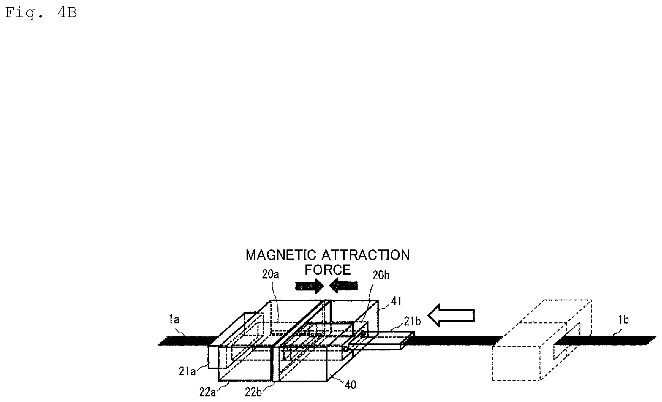

A method for attaching the magnetic structures 40 and 41 will be described with reference to Figs. 4A and 4B. The method for butting the ferrules 20a and 20b with each other is as described above. In this case, since no magnetic attraction force is generated between the magnetic structures 22a and 22b made of a soft magnetic material, the connection can be easily completed by pressing the ferrules 20a and 20b with each other by a jig or manual work.

Next, the magnetic structures 40 and 41 are combined to form a square hollow tube shape so that the optical fibers 1a fit inside the square hollow tube. The magnetic structures 40 and 41 are integrated by a magnetic attraction force. Then, as shown in Fig. 4B, by bringing the integrated magnetic structures 40 and 41 close to the magnetic structure 22b, a magnetic attraction force acts between the magnetic structure 22b and the magnetic structures 40 and 41 to connect them. The ferrule 20b is housed in the square-hollow-tube-shaped magnetic structures 40 and 41.

It is preferable that the magnetic structures 40 and 41 and the magnetic structure 22b be gradually brought closer to each other via a jig or a ring component 42 shown in Fig. 4A so that they do not suddenly collide with each other. By avoiding sudden collision, chipping of the magnetic structures 40 and 41 can be prevented.

When the magnetic structure 22b and the magnetic structures 40 and 41 are coupled together, a magnetic attraction force also acts between the magnetic structures 22a and 22b. Since the length of the magnetic structure 22b in the Z axis direction is short, a sufficient magnetic attraction force acts between the magnetic structures 22a and 22b. Thus, a force is applied to press the connection end faces of the ferrules 20a and 20b integrated with the magnetic structures 22a and 22b and simultaneously press the connection end faces of the optical fibers 1a and 1b protruding from the ferrules 20a and 20b.

Sizes of each of the magnetic structures 22a, 22b, 40, and 41, a gap between the magnetic structures 22a and 22b, and materials of the magnetic structures 22a, 22b, 40, and 41 are set so that the magnetic attraction force becomes 10 N, for example, and thus the connection end faces of the optical fibers 1a and 1b can be pressed against each other in the same manner as the MT connector or MPO connector. In this way, PC connection can be realized.

Also, in the structures shown in Figs. 1A, 1B, 2, 3A, 3B, 4A, and 4B, the magnetic structures 22a, 22b, 40, and 41 are disposed to surround the peripheries of the ferrules 20a and 20b, but any structure other than that shown in Figs. 1A, 1B, 2, 3A, 3B, 4A, and 4B may be used as long as it can generate a magnetic force. For example, the magnetic structure may be disposed only on one side of the ferrules 20a and 20b.

Further, the magnetic structures 40 and 41 may be formed of two or more hard magnetic materials, for example, multipole magnets having four poles, eight poles, or the like, instead of a combination of two half-split structures.

Also, for the magnetic structures 22a and 22b, any structure can be used as long as it is within a range satisfying the requirements of the present invention, and two or more structures may be combined together.

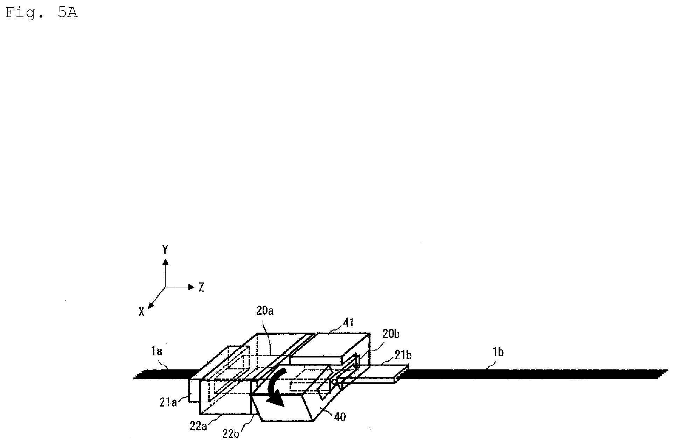

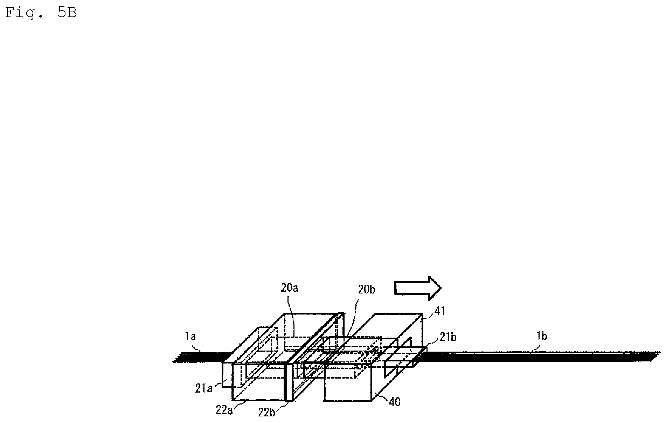

Next, a method for removing the magnetic structures 40 and 41 will be described with reference to Figs. 5A and 5B. When the connection between the optical connectors 2a and 2b is released, the magnetic structures 40 and 41 are first removed. In order to remove the magnetic structures 40 and 41, as shown in Fig. 5A, by applying a force in a direction different from the longitudinal direction (Z axis direction) of the optical fibers 1a and 1b to the magnetic structures 40 and 41, the connection with the magnetic structure 22b can be released with a smaller force than when the magnetic structures 40 and 41 are pulled in the Z axis direction. Also, although Fig. 5A shows an example in which the magnetic structures 40 and 41 are removed by rotating the magnetic structures 40 and 41 around the z axis, the method is not limited to this method. The magnetic structures 40 and 41 may be removed by pulling them in an X direction or by rotating them around a Y axis, and in any case, the connection with the magnetic structure 22b can be released by a smaller force than when the magnetic structures 40 and 41 are pulled in the Z axis direction.

The magnetic structures 40 and 41 may be removed as they are, or may be retreated to positions separated from the magnetic structure 22b as shown in Fig. 5B. By removing the magnetic structures 40 and 41 from the magnetic structure 22b, the magnetic attraction force between the magnetic structures 22a and 22b is eliminated, and thus the connection between the ferrules 20a and 20b can be released by a jig or manual work.

In the present example, attachment and detachment of the connection end faces of the ferrules 20a and 20b and attachment and detachment of the magnetic structures 40 and 41 can be performed in separate steps, and thus attaching and detaching work of the optical connectors 2a and 2b can be easily performed.

In the known configuration disclosed in NPL 1, the magnetic structures integrated with the ferrules are magnets. For this reason, in order to release the connection between the ferrules, it is necessary to apply a force larger than a magnetic attraction force acting between the magnetic structures integrated with the ferrules in a direction opposite thereto to separate the two ferrules. However, in a case in which the magnetic attraction force is, for example, about 10 N, it is necessary to apply a large force using a dedicated jig or the like, and the connection is hardly released. Further, when the two ferrules are separated from each other, an excessive force is applied to the ferrules and the guide pins, and thus there is a possibility that the ferrules and the guide pins may be deformed and broken.

On the other hand, in the present example, when the connection between the optical connectors 2a and 2b is released, the connection between the ferrules 20a and 20b can be released after the magnetic structures 40 and 41 are removed, and thus the connection can be released by a small force, and workability at the time of disconnection can be improved.

Further, in the known configuration disclosed in NPL 1, when the ferrules are connected to each other, it is necessary to fit guide pins into guide pin holes of the ferrules while a large magnetic attraction force acts between the magnetic structures integrated with the ferrules, and there is also a problem with workability at the time of connection. In addition, there is a possibility that the magnetic structures may be chipped due to strong collision between the magnetic structures, and there is also a possibility that powder of the magnetic structures may adhere to the connection end faces of the ferrules, and the optical characteristics may deteriorate.

On the other hand, in the present example, by forming the magnetic structures 40 and 41 to be attached later, there is no need to worry about the magnetic attraction force between the magnetic structures 22a and 22b when the ferrules 20a and 20b are connected to each other, and thus workability at the time of connection can be improved. The magnetic structures 40 and 41 are attached after the ferrules 20a and 20b are connected to each other, but they are not connected simultaneously with the connection between the ferrules 20a and 20b, and thus sudden collision between the magnetic structure 22b and the magnetic structures 40 and 41 can be easily prevented by using a jig, the ring component 42, or the like.

In addition, in the present example, even if chipped powder of the magnetic structures 40 and 41 is generated, there is a low possibility of the powder adhering to the connection end faces of the ferrules 20a and 20b after the connection between the ferrules 20a and 20b is completed, and there is a low possibility that the optical characteristics may deteriorate.

Next, other constituent elements of the present invention will be described. In the present invention, any known types and materials of the optical fibers 1a and 1b and any known types and materials of the ferrules 20a and 20b can be adopted. For example, the optical fibers 1a and 1b may be either well-known quartz-based optical fibers or plastic fibers. Also, as for the optical fibers 1a and 1b, the present invention can be applied to any of single mode fibers, multimode fibers, polarization holding fibers, photonic crystal fibers, multicore fibers, and the like.

Further, in portions exposed to the outside of the ferrules 20a and 20b, known resin coatings made of, for example, acrylic, epoxy, silicone, polyimide, or the like are provided at the peripheries of the optical fibers 1a and 1b, and silicone tubes, nylon coatings, or the like may be provided in two or more layers around the resin coatings. Also, polymer waveguides may be used instead of the optical fibers 1a and 1b.

Any of general-purpose plastics, engineering plastics, super engineering plastics, or the like, which are often used for MT ferrules, may be used for the material of the ferrules 20a and 20b.

Also, glass materials may be used with the same structures as the ferrules 20a and 20b, or a processed product based on a semiconductor material such as silicon, a ceramic material or the like may be used. For example, as in a known optical fiber array, the optical fibers 1a and 1b may be held and fixed between a glass block formed with a V groove and a lid component. By positioning and bonding two guide pins or the like to the glass block and the lid component, a ferrule made of a glass material having a positioning structure may be realized.

In addition, external shapes of the ferrules 20a and 20b and external shapes of the magnetic structures 22a, 22b, 40, and 41 may be different from those shown in Figs. 1A, 1B, 2, 3A, 3B, 4A, 4B, 5A, and 5B. Also, if necessary, the ferrules 20a and 20b and the magnetic structures 22a, 22b, 40, and 41 may be chamfered, filleted, or otherwise processed. These processes may be applied to other examples.

The 8-core optical fibers 1a and 1b are disposed at, for example, a pitch of approximately 250 µm. Naturally, the pitch and the number of cores of the optical fibers 1a and 1b are arbitrary, and any number of cores such as 2 cores, 4 cores, 8 cores, 12 cores, 16 cores, 24 cores, 32 cores, or the like can be adopted. A part of the optical fibers 1a and 1b may be a polarization holding fiber or the like.

In addition, in order to prevent the guide pins 3 from falling off, the guide pins 3 may be fixed to either one of the ferrules 20a and 20b. As a fixing method, there are a method of fixing by using other parts, and a method of using a bonding material, an adhesive, or the like.

Further, if necessary, openings of the guide pin holes 23a and 23b, openings of micro holes for the fibers of the ferrules 20a and 20b, and tips of the guide pins 3 may be tapered to facilitate insertion.

In the present example, a structure including the guide pins 3 and the guide pin holes 23a and 23b used in MT ferrules or the like is adopted as an alignment structure, but an alignment structure other than the present example may be used. For example, a protrusion may be formed on one connection end face of the ferrules 20a and 20b, and a guide groove fitted to the protrusion may be provided on the other connection end face.

In the present example, the opposing connection end faces of the ferrules 20a and 20b, the opposing connection end faces of the optical fibers 1a and 1b, and the opposing connection end faces of the magnetic structures 22a and 22b are perpendicular to the Z axis direction, but the connection end faces of the ferrules 20a and 20b and the connection end faces of the optical fibers 1a and 1b may be oblique end faces inclined by, for example, 8° with respect to an XY plane perpendicular to the Z axis direction. By forming the oblique end faces, almost no recombination of reflected return light into fiber cores occurs.

Further, the connection end faces of the magnetic structures 22a and 22b may also be inclined with respect to the XY plane perpendicular to the Z axis direction to be approximately parallel to the connection end faces of the ferrules 20a and 20b and the connection end faces of the optical fibers 1a and 1b. The end faces of the magnetic structures 40 and 41 may also be inclined.

In addition, in the present example, an example in which the connection end faces of the magnetic structures 22a and 22b and the connection end faces of the ferrules 20a and 20b are aligned on the same plane, or the connection end faces of the ferrules 20a and 20b are positioned to protrude from the connection end faces of the magnetic structures 22a and 22b has been described, but the present invention is of course not limited thereto.

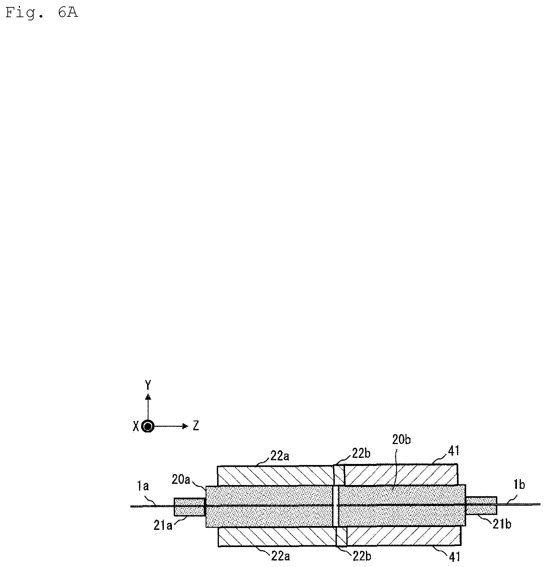

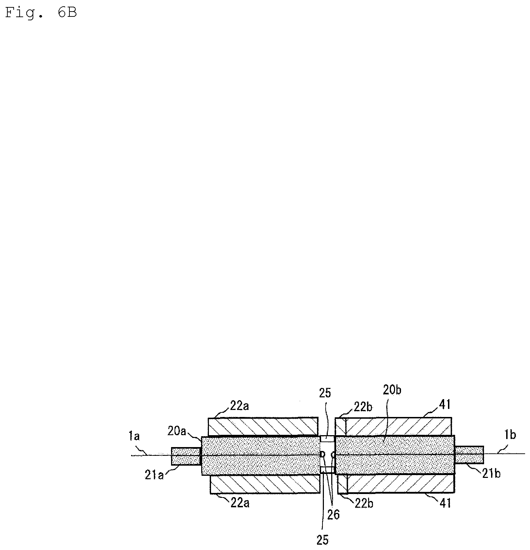

Figs. 6A and 6B show a modified example of the present example. The example shown in Fig. 6A is configured such that the connection end faces of the ferrules 20a and 20b are positioned to be slightly recessed from the connection end faces of the magnetic structures 22a and 22b, and a slight gap is provided between the optical fibers 1a and 1b while the opposing magnetic structures 22a and 22b are brought into contact with each other.

In the example shown in Fig. 6B, the connection end faces of the ferrules 20a and 20b are positioned to slightly protrude from the connection end faces of the magnetic structures 22a and 22b, but a spacer component 25 is disposed between the ferrules 20a and 20b in order to provide a gap between the optical fibers 1a and 1b. The optical fibers 1a and 1b are optically connected to each other via two micro lenses 26. Also, a configuration of realizing the PC connection by positioning the ferrule 20a to be recessed with respect to the connection end face of one magnetic structure 22a, positioning the ferrule 20b to protrude from the connection end face of the other magnetic structure 22b, and appropriately setting a depth of a recess of the ferrule 20a and a length of a protrusion of the ferrule 20b may be provided.

Next, a method for joining the ferrules 20a and 20b and the magnetic structures 22a and 22b will be described. As described above, the ferrules 20a and 20b and the magnetic structures 22a and 22b are integrated with each other by an arbitrary joining method such as adhesion, mechanical fitting, and metal joining (such as soldering). In order to determine a positional relation between the ferrules 20a and 20b and the magnetic structures 22a and 22b, it is preferable to provide a positioning structure.

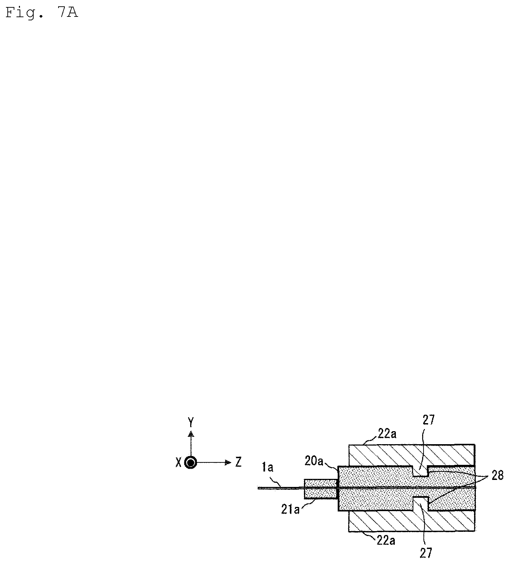

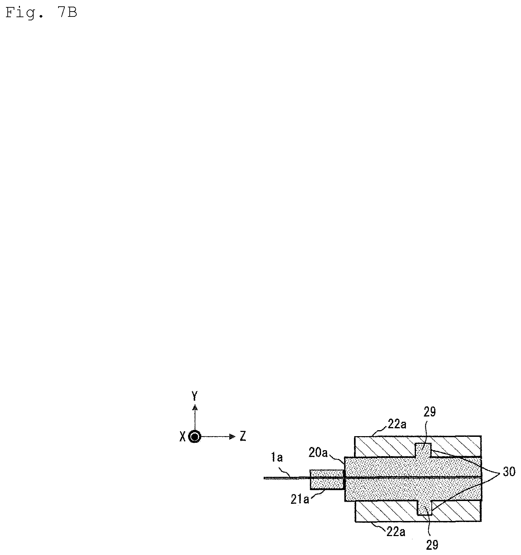

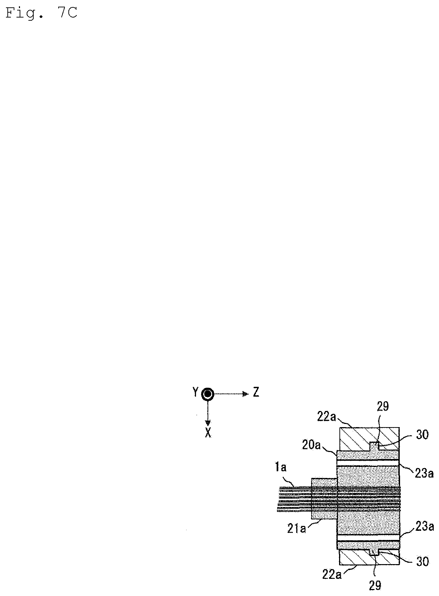

For example, in the example shown in Fig. 7A, the magnetic structure 22a is provided with protrusions 27, and the ferrule 20a is provided with grooves 28 fitted to the protrusions 27. The protrusions 27 and the grooves 28 form a positioning structure. On the other hand, in the examples of Figs. 7B and 7C, protrusions 29 are provided in the ferrule 20a, and grooves 30 fitted to the protrusions 29 are provided in the magnetic structure 22a. The protrusions 29 and the grooves 30 form a positioning structure.

In this way, by providing the positioning structure in the ferrule 20a and the magnetic structure 22a, it is possible to ensure positioning accuracy of the ferrule 20a and the magnetic structure 22a in the Z axis direction. Further, by providing a groove in the ferrule 20a or the magnetic structure 22a, it is possible to increase fixing strength between the ferrule 20a and the magnetic structure 22a when a magnetic force, or an insertion or extraction force is applied from the outside.

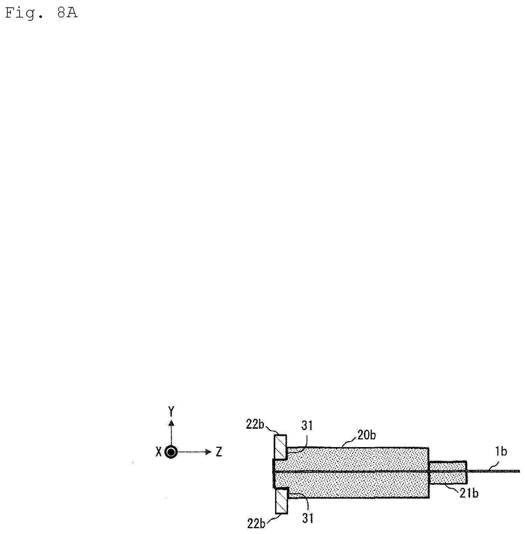

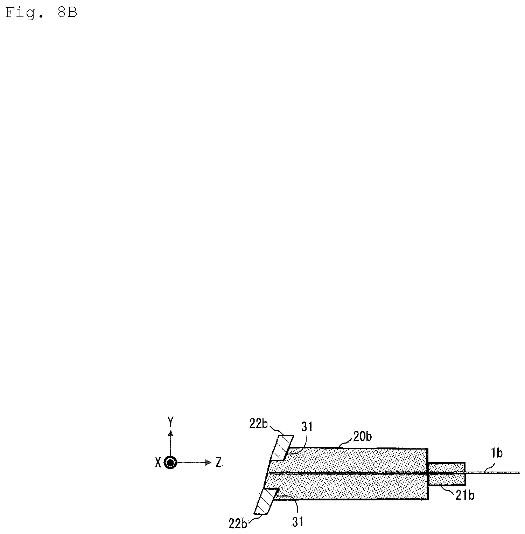

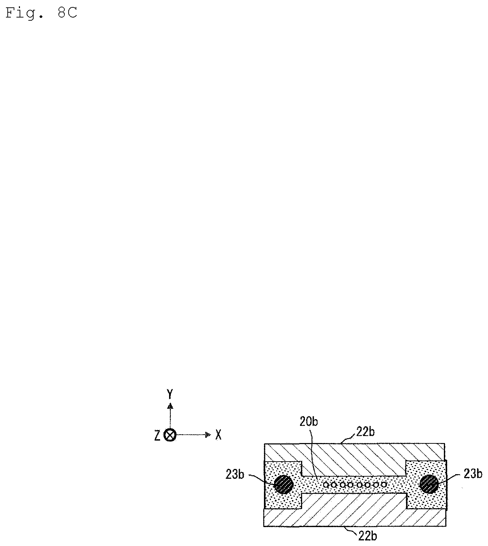

Figs. 8A, 8B, and 8C show other modified examples of the present example. In the examples of Figs. 8A and 8B, grooves 31 (a positioning structure) are formed in advance on an outer peripheral portion of the connection end face of the ferrule 20b, and the magnetic structure 22b is fitted into the grooves 31. Fig. 8A shows a case in which the connection end face of the magnetic structure 22b is perpendicular to the Z axis direction, and Fig. 8B shows a case in which the connection end face of the magnetic structure 22b is inclined with respect to the XY plane perpendicular to the Z axis direction.

In this way, by providing the positioning structure in the ferrule 20b similarly to the case of the ferrule 20a, it is possible to ensure positioning accuracy of the ferrule 20b and the magnetic structure 22b in the Z axis direction, and thus it is possible to increase fixing strength between the ferrule 20b and the magnetic structure 22b.

In the example of Fig. 8C, the ferrule 20b and the magnetic structure 22b are integrated with each other by an insert molding technique for embedding the magnetic structure 22b at the time of molding the ferrule 20b. Also, the cross-section of Fig. 8C is an example, and a cross-sectional shape after the insert molding is not limited thereto.

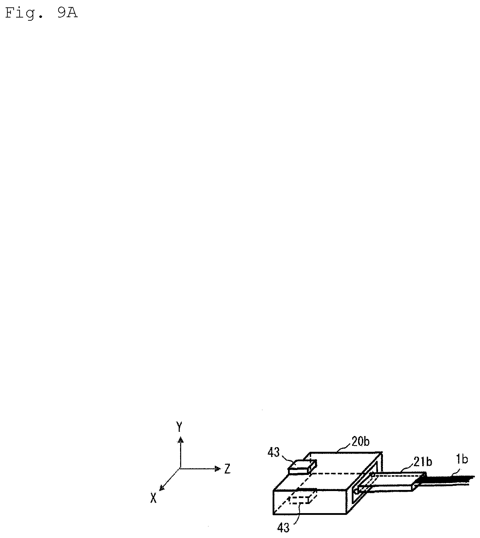

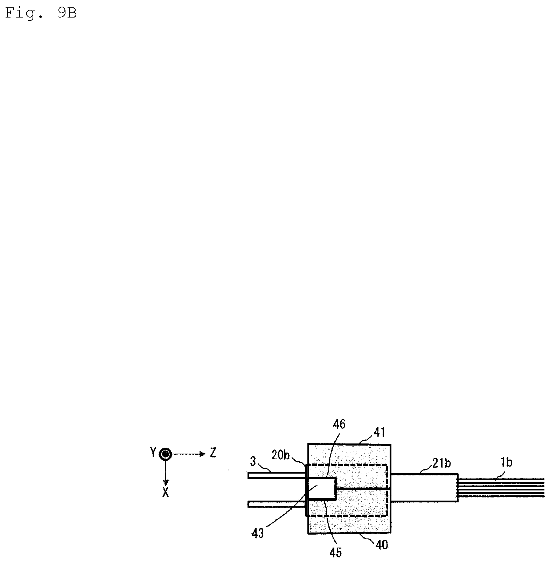

Figs. 9A to 9D show other modified examples of the present example. In the example of Fig. 9A, protrusions 43 are provided at two upper and lower positions of the ferrule 20b. In the example of Fig. 9B, magnetic structures 40 and 41 in which grooves 45 and 46 fitted to the protrusions 43 are formed are attached to the ferrule 20b. The protrusions 43 and the grooves 45 and 46 form a positioning structure for determining the positional relation between the ferrule 20b and the magnetic structures 40 and 41.

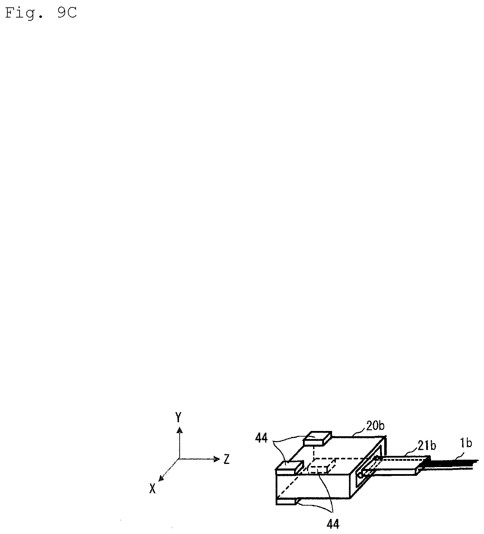

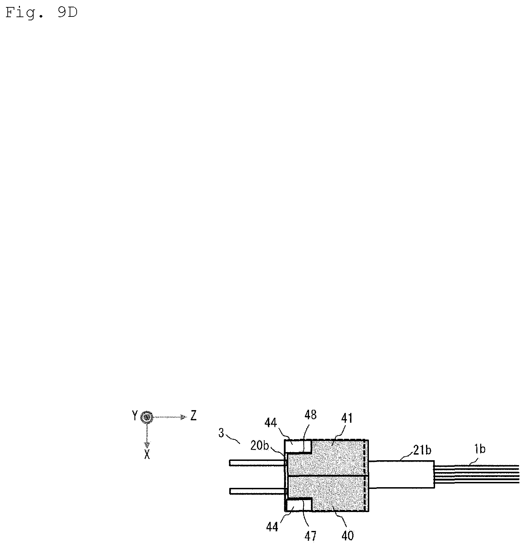

In the example of Fig. 9C, protrusions 44 are provided at four upper and lower positions of the ferrule 20b. In the example of Fig. 9D, magnetic structures 40 and 41 in which grooves 47 and 48 fitted to the protrusions 44 are formed are attached to the ferrule 20b. The protrusions 44 and the grooves 47 and 48 form a positioning structure for determining the positional relation between the ferrule 20b and the magnetic structures 40 and 41.

In the configurations shown in Figs. 9A to 9D, since the ferrule 20b is not provided with the magnetic structure 22b, the magnetic structures 40 and 41 serve as the second magnetic structure connected to the magnetic structure 22a (first magnetic structure) integrated with the ferrule 20a. It is not necessary to fix the magnetic structures 40 and 41 to the ferrule 20b. After the ferrules 20a and 20b are connected to each other, the magnetic structures 40 and 41 may be fitted to the ferrule 20b. By forming the magnetic structures 40 and 41 to be attached later, there is no need to worry about the magnetic attraction force between the magnetic structures 22a and the magnetic structures 40 and 41 when the ferrules 20a and 20b are connected to each other, and thus workability at the time of connection can be improved. As described above, the magnetic structures 40 and 41 may be not a combination of two half-split structures but a combination of two or more hard magnetic materials.

### [Second Example]

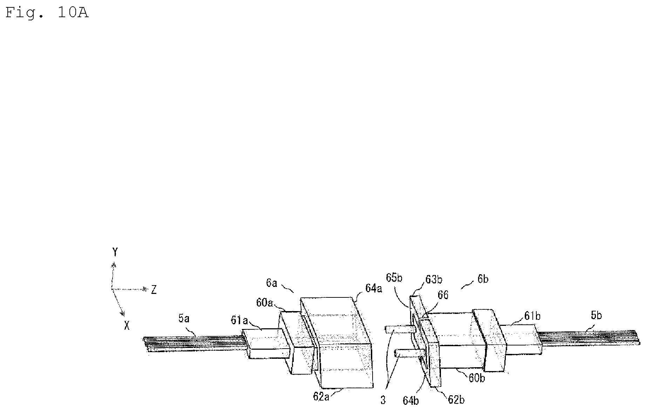

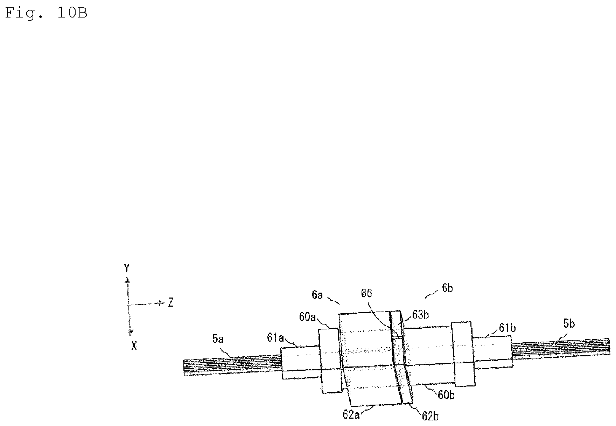

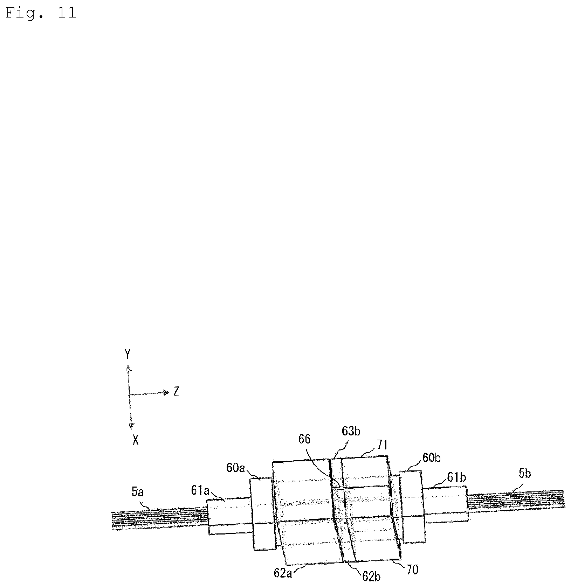

Fig. 10A is a perspective view of a multicore optical connector connection structure according to a second example of the present invention before ferrule connection, and Fig. 10B is a perspective view of the multicore optical connector connection structure after the ferrule connection. Fig. 11 is a perspective view showing a state in which magnets are attached after the ferrule connection of the multicore optical connector connection structure.

The multicore optical connector connection structure of the present example includes an optical connector 6a attached to tips of a plurality of optical fibers 5a, an optical connector 6b attached to tips of a plurality of optical fibers 5b, and guide pins 3 that connect ferrules of the optical connectors 6a and 6b to each other.

The optical connector 6a includes a ferrule 60a (the first alignment component) attached to the tips of the optical fibers 5a, a boot 61a that bundles the optical fibers 5a, and a magnetic structure 62a (the first magnetic structure) attached to a periphery of the ferrule 60a. Similarly, the optical connector 6b includes a ferrule 60b (the second alignment component) attached to the tips of the optical fibers 5b, a boot 61b that bundles the optical fibers 5b, and magnetic structures 62b and 63b (the second magnetic structure) attached to a periphery of the ferrule 60b.

The optical fibers 5a and 5b are 8-core quartz single mode fibers similar to the optical fibers 1a and 1b. The ferrules 60a and 60b are multi-core ferrules similar to the ferrules 20a and 20b. The optical fibers 5a and 5b are positioned to slightly protrude from connection end faces of the ferrules 60a and 60b, and connection end faces of the optical fibers 5a and 5b are polished.

A connection end face 64a of the magnetic structure 62a and the connection end face of the ferrule 60a are positioned to be aligned on the same plane, but the connection end face of the ferrule 60a may be positioned to protrude from the connection end face 64a of the magnetic structure 62a. Similarly, connection end faces 64b and 65b of the magnetic structures 62b and 63b and the connection end face of the ferrule 60b are positioned to be aligned on the same plane, but the connection end face of the ferrule 60b may be positioned to protrude from the connection end faces 64b and 65b of the magnetic structures 62b and 63b.

In the present example, the connection end faces of the ferrules 60a and 60b and the connection end faces of the optical fibers 5a and 5b are inclined by, for example, 8° with respect to an XY plane perpendicular to a longitudinal direction (a Z axis direction) of the optical fibers 5a and 5b.

The connection end face 64a of the magnetic structure 62a opposing the magnetic structures 62b and 63b is inclined by 8° with respect to the XY plane perpendicular to the Z axis direction to be approximately parallel to the connection end face of the ferrule 60a integrated with the magnetic structure 62a and the connection end faces of the optical fibers 5a. Similarly, the connection end faces 64b and 65b of the magnetic structures 62b and 63b opposing the magnetic structure 62a are inclined by 8° with respect to the XY plane to be approximately parallel to the connection end face of the ferrule 60b integrated with the magnetic structures 62b and 63b and the connection end faces of the optical fibers 5b.

The magnetic structures 62b and 63b are set to be shorter in the Z axis direction than the magnetic structure 62a and the ferrules 60a and 60b.

In the present example, as shown in Fig. 10A, the guide pins 3 are inserted one by one into two guide pin holes of the ferrule 60b of the optical connector 6b, these guide pins 3 are inserted into guide pin holes of the ferrule 60a of the optical connector 6a, the connection end faces of the ferrules 60a and 60b are butted against each other, and the connection end faces of the optical fibers 5a and 5b are butted against each other, thereby connecting the optical connectors 6a and 6b to each other.

All of the magnetic structures 62a, 62b, and 63b are made of a soft magnetic material. For a method for joining the ferrules 60a and 60b and the magnetic structures 62a, 62b, and 63b, any joining method such as adhesion, mechanical fitting, or metal joining (such as soldering) may be used.

In the present example, magnetic structures 70 and 71 (the third magnetic structure) are disposed on end face sides opposite to the connection end faces 64b and 65b of the magnetic structures 62b and 63b. End faces of the magnetic structures 70 and 71 are inclined by 8° with respect to the XY plane perpendicular to the Z axis direction to be approximately parallel to the end faces of the magnetic structures 62b and 63b.

The magnetic structures 70 and 71 are made of hard magnetic materials (so-called magnets). Magnetization directions of N poles and S poles of the magnetic structures 70 and 71 are set in the Z axis direction.

Similarly to the first example, the magnetic structures 70 and 71 are made of hard magnetic materials each having a half-split structure obtained by dividing a square hollow tube (square cylinder) into halves. By combining the magnetic structures 70 and 71 to be formed into a square hollow tube shape, a part of the ferrule 60b can be housed inside the square hollow tube. As described above, the magnetization directions of the N and S poles of the magnetic structures 70 and 71 are set in the Z axis direction, but the magnetization directions of the N and S poles are set to be opposite to each other so that they are integrated with each other by a magnetic attraction force. For example, the magnetization direction of the magnetic structure 70 is set so that the S pole and the N pole are arranged in order in the Z axis direction from the magnetic structures 62b and 63b side, while the magnetization direction of the magnetic structure 71 is set so that the N pole and the S pole are arranged in order in the Z axis direction from the magnetic structures 62b and 63b side.

A difference from the first example is that the second magnetic structure integrated with the ferrule 60b is divided into two. The magnetic structures 62b and 63b are each made of a soft magnetic material of a half-split structure obtained by dividing a square hollow tube (square cylinder) into halves. By combining the magnetic structures 62b and 63b to be formed into a square hollow tube shape, a form in which a periphery of the connection end face of the ferrule 60b is surrounded by the magnetic structures 62b and 63b is obtained.

However, as shown in Figs. 10A, 10B, and 11, when integrated with the ferrule 60b, the two magnetic structures 62b and 63b are disposed to be separated from each other without being in contact with each other. Accordingly, a gap 66 filled with air is formed between the magnetic structures 62b and 63b.

In the present example, similarly to the first example, attachment and detachment of the connection end faces of the ferrules 60a and 60b and attachment and detachment of the magnetic structures 70 and 71 can be performed in separate steps, and thus attaching and detaching work of the optical connectors 6a and 6b can be easily performed. When the connection between the optical connectors 6a and 6b is released, the connection between the ferrules 60a and 60b is released after the magnetic structures 70 and 71 are removed, and thus the connection can be released with a small force, and workability at the time of disconnection can be improved.

In addition, in the present example, by forming the magnetic structures 70 and 71 to be attached later, there is no need to worry about the magnetic attraction force between the magnetic structures 62a, 62b, and 63b when the ferrules 60a and 60b are connected to each other, and thus workability at the time of connection can be improved. The magnetic structures 70 and 71 are attached after the ferrules 60a and 60b are connected to each other, but the attachment is not performed simultaneously with the connection of the ferrules 60a and 60b, and thus sudden collision of the magnetic structures 62b and 63b with the magnetic structures 70 and 71 can be easily prevented by using a jig, the above-mentioned ring component, or the like.

In addition, in the present example, even if chipped powder of the magnetic structures 70 and 71 is generated, there is a low possibility of the powder adhering to the connection end faces of the ferrules 60a and 60b after the connection of the ferrules 60a and 60b is completed, and thus there is a low possibility that the optical characteristics may deteriorate.

Further, in the present example, by providing the gap 66 between the magnetic structures 62b and 63b, the magnetic attraction force acting between the magnetic structures 62a, 62b, and 63b can be strengthened. The reason why the magnetic attraction force increases will be described in detail below.

Usually, a magnetic attraction force acts between a hard magnetic material and a soft magnetic material. The magnetic attraction force is stronger when the magnetic structure 62a made of a soft magnetic material and the magnetic structures 70 and 71 made of a hard magnetic material are directly attached to each other. On the other hand, in the present example, since thin magnetic structures 62b and 63b made of a soft magnetic material are present between the magnetic structure 62a and the magnetic structures 70 and 71, the magnetic attraction force is reduced. Generally, the longer the magnetic structures 62b and 63b are, the lower the magnetic attraction force is, and thus it is required to set lengths of the magnetic structures 62b and 63b in the Z axis direction as short as possible.

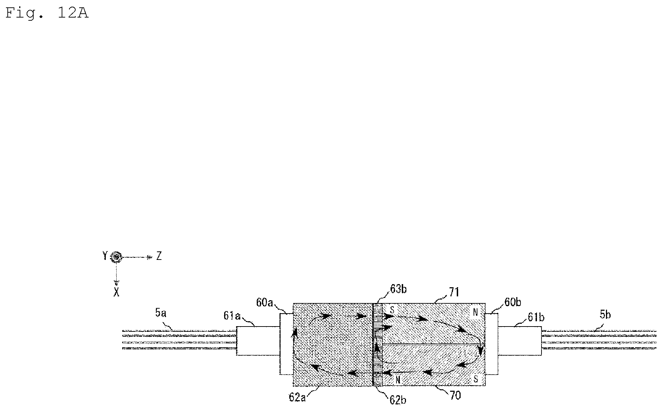

The reason why the magnetic attraction force is reduced will be described with reference to Fig. 12A. Fig. 12A is a cross-sectional view showing magnetic flux density vectors when there is no gap between the magnetic structures 62b and 63b. When there is no gap between the magnetic structures 62b and 63b, a loop of a magnetic circuit is closed in the magnetic structures 62b and 63b as shown in Fig. 12A. This results in a reduction in the magnetic attraction force between the magnetic structure 62a and the magnetic structures 62b and 63b.

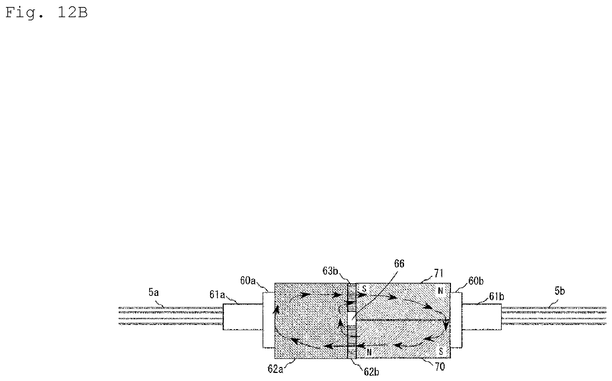

On the other hand, Fig. 12B is a cross-sectional view showing magnetic flux density vectors when the gap 66 is provided between the magnetic structures 62b and 63b as in the present example. By providing the gap 66 filled with air between the magnetic structures 62b and 63b, the loop of the magnetic circuit returns from the magnetic structures 70 and 62b to the magnetic structures 63b and 71 side via the magnetic structure 62a as shown in Fig. 12B. Accordingly, in the present example, the magnetic attraction force acting between the magnetic structures 62a, 62b, and 63b can be strengthened.

As is apparent from Fig. 12B, it is required to provide the gap 66 in the vicinity of a connection portion between the two half-split magnetic structures 70 and 71. In actual simulations, according to the configuration of the present example, it has been also confirmed that, by providing the gap 66 with a width of 0.4 mm, the reduction of the magnetic attraction force can be prevented as compared to the case in which there is no gap 66.

As described above, in the present example, it is possible to realize the optical connector connection structure in which the workability of the attachment and detachment of the optical connectors 6a and 6b is improved, and by minimizing the reduction in the magnetic attraction force between the magnetic structure 62a and the magnetic structures 62b and 63b, a sufficient pressing force is generated between the connection end faces of the ferrules 60a and 60b.

In addition, although Figs. 10A, 10B, 11, 12A, and 12B shows an example in which the gap 66 and the connection portion between the magnetic structures 70 and 71 are provided on upper and lower surfaces (on the XZ plane) of the ferrule 60b, the positions at which the gap 66 and the connection portion between the magnetic structures 70 and 71 are provided are arbitrary. For example, the gap 66 and the connection portion between the magnetic structures 70 and 71 may be provided on both side surfaces (on YZ plane sides) of the ferrule 60b.

Also, the gap 66 may be filled with a nonmagnetic material instead of air. In addition, the magnetic structures 62b and 63b may not be two half-split structures, but they may be formed by combining two or more soft magnetic materials together and disposing these soft magnetic materials around the ferrule 60b in a form in which they are separated from each other via a gap filled with air or a nonmagnetic material.

### [Third Example]

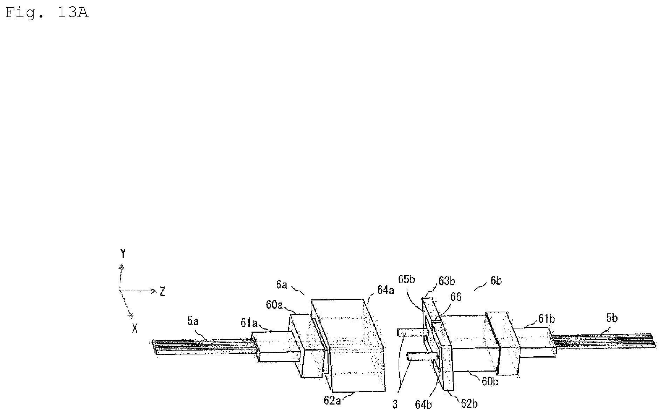

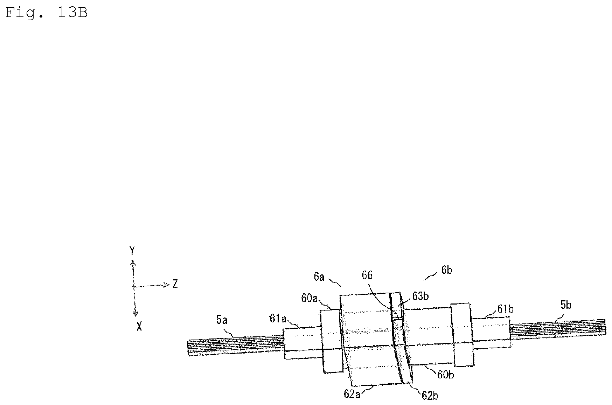

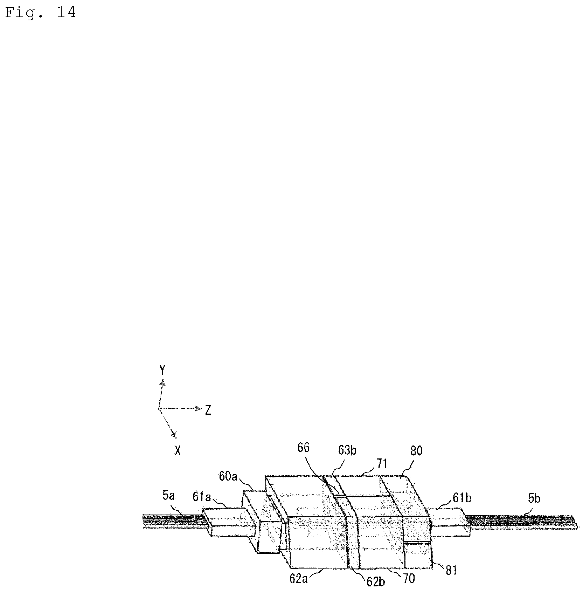

Fig. 13A is a perspective view of a multicore optical connector connection structure according to a third example of the present invention before ferrule connection, and Fig. 13B is a perspective view of the multicore optical connector connection structure after the ferrule connection. Fig. 14 is a perspective view showing a state in which magnets are attached after the ferrule connection of the multicore optical connector connection structure.

The optical connectors 6a and 6b have the same configuration as in the second example. A difference from the second example is that after the magnetic structures 70 and 71 are attached as described above, magnetic structures 80 and 81 (a fourth magnetic structure) are further attached to end face sides opposite to the connection end faces of the magnetic structures 70 and 71 connected to the magnetic structures 62b and 63b. The end faces of the magnetic structures 80 and 81 are inclined by 8° with respect to the XY plane perpendicular to the longitudinal direction (Z axis direction) of the optical fibers 5a and 5b to be approximately parallel to the end faces of the magnetic structures 70 and 71.

The magnetic structures 80 and 81 are made of soft magnetic materials and function as so-called yokes. Similarly to the magnetic structures 70 and 71, the magnetic structures 80 and 81 are made of soft magnetic materials each having a half-split structure obtained by dividing a square hollow tube (square cylinder) into halves. By combining the magnetic structures 80 and 81 to be formed into a square hollow tube shape, a form in which a periphery of the end face on the boot 61b side of the ferrule 60b is surrounded by the magnetic structures 80 and 81 is obtained. By forming the magnetic structures 80 and 81 into two half-split structures, the magnetic structures 80 and 81 can be attached after the magnetic structures 70 and 71 have been attached.

Also, the fourth magnetic structure may be made of a square hollow tube shaped soft magnetic material instead of using two half-split soft magnetic materials. In this case, if the optical fibers 5b are prepared in advance to fit in the square hollow tube of the fourth magnetic structure, the fourth magnetic structure can be attached after the magnetic structures 70 and 71 have been attached.

Further, when the fourth magnetic structure is made of two half-split soft magnetic materials as in the present example, the reduction in the magnetic attraction force between the magnetic structure 62a and the magnetic structures 62b and 63b can be inhibited by changing a connection position between the magnetic structures 70 and 71 and a connection position between the magnetic structures 80 and 81.

For example, as shown in the example of Fig. 14, in the case of a configuration in which the magnetic structures 70 and 71 are opposed to each other with the YZ plane as a boundary, the magnetic structures 80 and 81 may be opposed to each other with the XZ plane as a boundary. On the contrary, in the case of a configuration in which the magnetic structures 70 and 71 are opposed to each other with the XZ plane as a boundary, the magnetic structures 80 and 81 may be opposed to each other with the YZ plane as a boundary. In this way, by changing the connection position between the magnetic structures 70 and 71 and the connection position between the magnetic structures 80 and 81, the loop of the magnetic circuit can be efficiently confined.

In the present example, attachment and detachment of the connection end faces of the ferrules 60a and 60b and attachment and detachment of the magnetic structures 70, 71, 80, and 81 can be performed in separate steps, and thus attaching and detaching work of the optical connectors 6a and 6b can be easily performed. When the connection of the optical connectors 6a and 6b is released, the connection of the ferrules 60a and 60b can be released after the magnetic structures 70 and 71 have been removed, and thus the connection can be released with a small force, and workability at the time of disconnection can be improved.

In the present example, by forming the magnetic structures 70 and 71 to be attached later, there is no need to worry about the magnetic attraction force between the magnetic structures 62a, 62b, and 63b when the ferrules 60a and 60b are connected to each other, and thus workability at the time of connection can be improved. The magnetic structures 70 and 71 are attached after the ferrules 60a and 60b have been connected to each other, but the attachment is not performed simultaneously with the connection of the ferrules 60a and 60b, and thus sudden collision of the magnetic structures 62b and 63b with the magnetic structures 70 and 71 can be easily prevented by using a jig, the above-mentioned ring component, or the like.

In addition, in the present example, even if the chipped powder of the magnetic structures 70 and 71 is generated, there is a low possibility of the powder adhering to the connection end faces of the ferrules 60a and 60b after the connection of the ferrules 60a and 60b is completed, and thus there is a low possibility that the optical characteristics may deteriorate.

Further, in the present example, by attaching the magnetic structures 80 and 81 functioning as yokes to strengthen the confinement of the magnetic circuit, the magnetic attraction force between the magnetic structure 62a and the magnetic structures 62b and 63b can be increased. As a result, in the present example, the workability of the attachment and detachment of the optical connectors 6a and 6b can be improved, and a sufficient pressing force can be generated between the connection end faces of the ferrules 60a and 60b.

In addition, in the second and third examples, similarly to the first example, the connection end faces of the ferrules 60a and 60b, the connection end faces of the optical fibers 5a and 5b, and the end faces of the magnetic structures 62a, 62b, 63b, 70, 71, 80, and 81 may be perpendicular to the Z axis direction. Alternatively, the end faces of the magnetic structures 62a, 62b, 63b, 70, 71, 80, and 81 may be perpendicular to the Z-axis direction while the connection end faces of the ferrules 60a and 60b and the connection end faces of the optical fibers 5a and 5b are inclined with respect to the XY plane.

Also, in the present example, the magnetic structures 80 and 81 may not be two half-split structures, but may be formed by combining two or more soft magnetic materials and attaching the fourth square hollow tube shaped magnetic structure obtained by combining these soft magnetic materials to the periphery of the ferrule 60b.

### [Fourth Example]

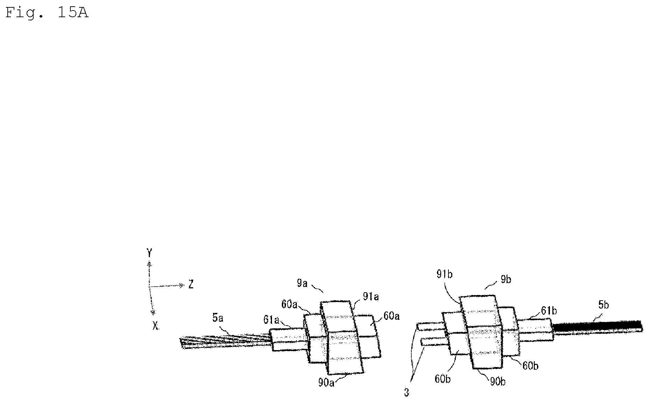

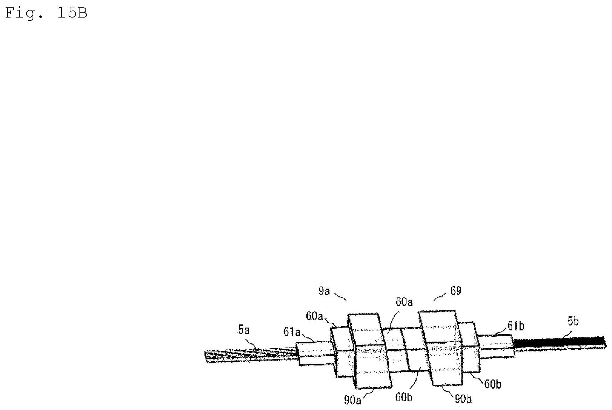

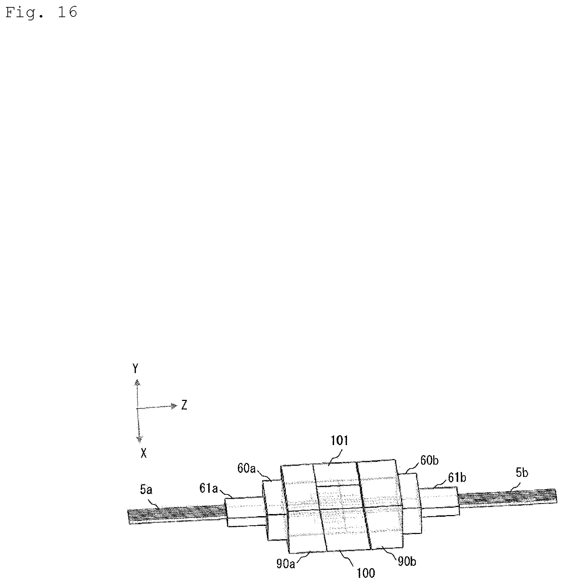

Fig. 15A is a perspective view of a multicore optical connector connection structure according to a fourth example of the present invention before ferrule connection, and Fig. 15B is a perspective view of the multicore optical connector connection structure after the ferrule connection. Fig. 16 is a perspective view showing a state in which magnets are attached after the ferrule connection of the multicore optical connector connection structure.

The multicore optical connector connection structure of the present example includes an optical connector 9a attached to tips of a plurality of optical fibers 5a, an optical connector 9b attached to tips of a plurality of optical fibers 5b, and guide pins 3 that connect ferrules of the optical connectors 9a and 9b to each other.

The optical connector 9a includes a ferrule 60a (the first alignment component) attached to the tips of the optical fibers 5a, a boot 61a that bundles the optical fibers 5a, and a magnetic structure 90a (the first magnetic structure) attached to a periphery of the ferrule 60a. Similarly, the optical connector 9b includes a ferrule 60b (the second alignment component) attached to the tips of the optical fibers 5b, a boot 61b that bundles the optical fibers 5b, and a magnetic structure 90b (the second magnetic structure) attached to a periphery of the ferrule 60b.

The magnetic structures 90a and 90b integrated with the ferrules 60a and 60b have almost the same lengths in the longitudinal direction (Z axis direction) of the optical fibers 1a and 1b. A connection end face 91a of the magnetic structure 90a opposing the magnetic structure 90b is inclined by 8° with respect to the XY plane perpendicular to the Z axis direction to be approximately parallel to a connection end face of the ferrule 60a integrated with the magnetic structure 90a and connection end faces of the optical fibers 5a. Similarly, a connection end face 91b of the magnetic structure 90b opposing the magnetic structure 90a is inclined by 8° with respect to the XY plane to be approximately parallel to a connection end face of the ferrule 60b integrated with the magnetic structure 90b and connection end faces of the optical fibers 5b.

In addition, the connection end face of the ferrule 60a is positioned to protrude from the connection end face 91a of the magnetic structure 90a, and the connection end face of the ferrule 60b is similarly positioned to protrude from the connection end face 91b of the magnetic structure 90b. The magnetic structures 90a and 90b are both made of a soft magnetic material such as SUS403.

A difference from the first to third examples is that magnetic structures 100 and 101 (the third magnetic structures) are disposed between the magnetic structures 90a and 90b. Both connection end faces of the magnetic structures 100 and 101 opposing the magnetic structures 90a and 90b are inclined by 8° with respect to the XY plane perpendicular to the Z axis direction to be approximately parallel to the connection end faces 91a and 91b of the magnetic structures 90a and 90b.

The magnetic structures 100 and 101 are made of hard magnetic materials (so-called magnets). Magnetization directions of N poles and S poles of the magnetic structures 100 and 101 are set in the Z axis direction.

The magnetic structures 100 and 101 are each made of a hard magnetic material of a half-split structure obtained by dividing a square hollow tube (square cylinder) into halves. By combining the magnetic structures 100 and 101 to be formed into a square hollow tube shape, the connection end face portions of the ferrules 60a and 60b can be housed inside the square hollow tube. As described above, the magnetization directions of the N poles and the S poles of the magnetic structures 100 and 101 are set in the Z axis direction, but the magnetization directions of the N poles and the S poles are set to be opposite to each other so that they are integrated with each other by a magnetic attraction force. For example, the magnetization direction of the magnetic structure 100 is set so that the S pole and the N pole are arranged in order in the Z axis direction from the magnetic structure 90a side, while the magnetization direction of the magnetic structure 101 is set so that the N pole and the S pole are arranged in order in the Z axis direction from the magnetic structure 90a side.

It is not necessary to fix the magnetic structures 100 and 101 to the ferrules 60a and 60b. After the ferrules 60a and 60b have been connected to each other, the magnetic structures 100 and 101 are attached later, and thus a magnetic attraction force can be generated between the magnetic structures 90a and 90b.

When the connection of the optical connectors 9a and 9b is released, the magnetic attraction force between the magnetic structures 90a and 90b can be eliminated by removing the magnetic structures 100 and 101, and thus the connection of the ferrules 60a and 60b can be easily released, and attaching and detaching work of the optical connectors 9a and 9b can be easily performed.

In order to insert the magnetic structures 100 and 101, it is required to set a length of the magnetic structure 90b shorter than a distance between the magnetic structures 90a and 90b. Although a slight gap is generated between the magnetic structure 90a and the magnetic structures 100 and 101 or between the magnetic structure 90b and the magnetic structures 100 and 101 due to mechanical tolerance or the like, the gap may be a factor of lowering the magnetic attraction force.

Thus, a soft magnetic material such as a magnetic metal foil may be added between the magnetic structure 90a and the magnetic structures 100 and 101 or between the magnetic structure 90b and the magnetic structures 100 and 101. By adding the soft magnetic material, a reduction in the magnetic attraction force can be inhibited.

In the present example, attachment and detachment of the connecting end faces of the ferrules 60a and 60b and attachment and detachment of the magnetic structures 100 and 101 can be performed in separate steps, and thus the attaching and detaching work of the optical connectors 9a and 9b can be easily performed. When the connection of the optical connectors 9a and 9b is released, the connection of the ferrules 60a and 60b can be released after the magnetic structures 100 and 101 have been removed, and thus the connection can be released with a small force, and workability at the time of disconnection can be improved.

Further, in the present example, by forming the magnetic structures 100 and 101 to be attached later, there is no need to worry about the magnetic attraction force between the magnetic structures 90a and 90b when the ferrules 60a and 60b are connected to each other, and workability at the time of connection can be improved. The magnetic structures 100 and 101 are attached after the ferrules 60a and 60b have been connected to each other, but the attachment is not performed simultaneously with the connection of the ferrules 60a and 60b, and thus sudden collision of the magnetic structures 90a and 90b with the magnetic structures 100 and 101 can be easily prevented by using a jig or the like.

In addition, in the present example, even if chipped powder of the magnetic structures 100 and 101 is generated, there is a low possibility of the powder adhering to the connection end faces of the ferrules 60a and 60b after the connection of the ferrules 60a and 60b is completed, and thus there is a low possibility that the optical characteristics may deteriorate.

Also, in the present example, similarly to the first example, the connection end faces of the ferrules 60a and 60b, the connection end faces of the optical fibers 5a and 5b, and the end faces of the magnetic structures 90a 90b, 100, and 101 may be perpendicular to the Z axis direction.

Also, in the present example, the magnetic structures 100 and 101 may not be two half-split structures, but may be formed by combining two or more hard magnetic materials and attaching the square hollow tube shaped third magnetic structure obtained by combining these hard magnetic materials to peripheries of the connection end faces of the ferrules 60a and 60b.

Although the first to fourth examples have been described above, it is needless to say that the present invention can also be applied to any combination of connection objects, connection structures, connection end faces, positioning structures, magnetic structures, materials and arrangements of various components described in the first to fourth examples.

### [Industrial Applicability]

The present invention can be applied to techniques for connecting optical connectors.

### [Reference Signs List]

1a, 1b, 5a, 5b Optical fiber
2a, 2b, 6a, 6b, 9a, 9b Optical connector
3 Guide pin
20a, 20b, 60a, 60b Ferrule
21a, 21b, 61a, 61b Boot
22a, 22b, 40, 41, 62a, 62b, 63b, 70, 71, 80, 81, 90b, 90b, 100, 101 Magnetic structure
23a, 23b Guide pin hole
25 Spacer component
26 Micro lens
27, 29, 43, 44 Protrusion
28, 30, 45, 46, 47, 48 Groove
66 Gap

## Claims

1. An optical connector connection structure comprising:
a first optical connector (2a) attached to a tip of a first optical fiber (1a), the first optical connector including a first alignment component (20a) configured to fix the first optical fiber, and a first magnetic structure (22a) made of a soft magnetic material and integrated with the first alignment component;
a second optical connector (2b) attached to a tip of a second optical fiber (1b) and connectable to the first optical connector, the second optical connector including a second alignment component (20b) configured to fix the second optical fiber, and a second magnetic structure (22b) made of a soft magnetic material and integrated with the second alignment component; and
a third magnetic structure (40, 41) made of a hard magnetic material, the second magnetic structure including a second connection end face (24b) opposing a first connection end (24a) face of the first magnetic structure and a third end face opposite to the second connection end face, and the third magnetic structure disposed on a side of the third end face,
**characterized in that**
the second magnetic structure (22b) has a length shorter in a longitudinal direction of the optical fiber than a length of the first magnetic structure; and
the third magnetic structure (40, 41) is removable in order to release connection between the first optical connector and the second optical connector.

2. The optical connector connection structure according to claim 1, wherein
the third magnetic structure comprises two or more hard magnetic material elements, the two or more hard magnetic material elements being combined with each other to form the third magnetic structure having a square hollow tube shape that is attached to a periphery of the second alignment component.

3. The optical connector connection structure according to claim 1 or 2, wherein
the second magnetic structure comprises two or more soft magnetic material elements, wherein the two or more soft magnetic material elements are disposed at a periphery of the second alignment component and separated from each other via a gap filled with air or a nonmagnetic material.

4. The optical connector connection structure according to any of claims 1 to 3, further comprising
a fourth magnetic structure (80, 81) made of a soft magnetic material and disposed on an end face side opposite to a connection end face of the third magnetic structure with the second magnetic structure.

5. The optical connector connection structure according to claim 4, wherein
the fourth magnetic structure comprises two or more soft magnetic material elements, the two or more hard magnetic material elements being combined with each other to form the fourth magnetic structure having a square hollow tube shape that is attached to a periphery of the second alignment component.

6. The optical connector connection structure according to any of claims 1 to 5, wherein
the first and second alignment components and the first and second magnetic structures have positioning structures for determining a positional relationship between the first alignment component and the first magnetic structure and a positional relationship between the second alignment component and the second magnetic structure, respectively.

7. The optical connector connection structure according to any of claims 1 to 5, wherein
the second magnetic structure is integrally molded with the second alignment component.

8. An optical connector connection structure comprising:
a first optical connector (9a) attached to a tip of a first optical fiber (5a), the first optical connector including a first alignment component (60a) configured to fix the first optical fiber, and a first magnetic structure (90a) made of a soft magnetic material and integrated with the first alignment component;
a second optical connector (9b) attached to a tip of a second optical fiber (5b) and connectable to the first optical connector, the second optical connector including a second alignment component (60b) configured to fix the second optical fiber, and a second magnetic structure (90b) made of a soft magnetic material and integrated with the second alignment component; and
a third magnetic structure (100, 101) made of a hard magnetic material, the third magnetic structure disposed such that the first magnetic structure and the second magnetic structure are connected to each other when the first optical connector is connected to the second optical connector,
wherein
the first and second magnetic structures are positioned so that connection end faces of the first and second alignment components, which are opposed to each other, protrude with respect to connection end faces of the first and second magnetic structures, which are opposed to each other,
the third magnetic structure comprises two or more hard magnetic material elements, the two or more hard magnetic material elements being combined with each other to form the third magnetic structure having a square hollow tube shape that is attached to peripheries of the connection end faces of the first and the second alignment components, **characterized in that**
the third magnetic structure (100, 101) is removable in order to release connection between the first optical connector and the second optical connector.

9. An optical connector connection structure comprising:
a first optical connector (2a) attached to a tip of a first optical fiber (1a), the first optical connector including a first alignment component (20a) configured to fix the first optical fiber, and a first magnetic structure (22a) made of a soft magnetic material and integrated with the first alignment component;
a second optical connector (2b) attached to a tip of a second optical fiber (1b) and connectable to the first optical connector, the second optical connector including a second alignment component (20b) configured to fix the second optical fiber; and
a second magnetic structure (40, 41) disposed at a periphery of the second alignment component, wherein
the second magnetic structure comprises two or more hard magnetic material elements, the two or more hard magnetic material elements being combined with each other to form the second magnetic structure having a square hollow tube shape that is attached to a periphery of the second alignment component,
**characterized in that**
at least one of the second alignment component and the second magnetic structure has a positioning structure for determining a positional relationship between the second alignment component and the second magnetic structure, and
the second magnetic structure (40, 41) is removable in order to release connection between the first optical connector and the second optical connector.

## Patentansprüche

1. Verbindungsstruktur für optischen Stecker, umfassend:
einen ersten optischen Stecker (2a), der an einer Spitze einer ersten optischen Faser (1a) angebracht ist, wobei der erste optische Stecker eine erste Ausrichtungskomponente (20a), die konfiguriert ist, um die erste optische Faser zu fixieren, und eine erste magnetische Struktur (22a), die aus einem weichmagnetischen Material hergestellt und mit der ersten Ausrichtungskomponente integriert ist, beinhaltet;
einen zweiten optischen Stecker (2b), der an einer Spitze einer zweiten optischen Faser (1b) angebracht und mit dem ersten optischen Stecker verbindbar ist, wobei der zweite optische Stecker eine zweite Ausrichtungskomponente (20b), die konfiguriert ist, um die zweite optische Faser zu fixieren, und eine zweite magnetische Struktur (22b), die aus einem weichmagnetischen Material hergestellt und mit der zweiten Ausrichtungskomponente integriert ist, beinhaltet; und
eine dritte magnetische Struktur (40, 41), die aus einem hartmagnetischen Material hergestellt ist, wobei die zweite magnetische Struktur eine zweite Verbindungsendfläche (24b), die einer ersten Verbindungsendfläche (24a) der ersten magnetischen Struktur gegenüberliegt, und eine dritte Endfläche, die der zweiten Verbindungsendfläche gegenüberliegt, beinhaltet und die dritte magnetische Struktur auf einer Seite der dritten Endfläche angeordnet ist,
**dadurch gekennzeichnet, dass**
die zweite magnetische Struktur (22b) eine Länge aufweist, die in einer Längsrichtung der optischen Faser kürzer ist als eine Länge der ersten magnetischen Struktur; und
die dritte magnetische Struktur (40, 41) entfernbar ist, um die Verbindung zwischen dem ersten optischen Stecker und dem zweiten optischen Stecker zu lösen.

2. Verbindungsstruktur für optischen Stecker nach Anspruch 1, wobei
die dritte magnetische Struktur zwei oder mehr Elemente aus hartmagnetischem Material umfasst, wobei die zwei oder mehr Elemente aus hartmagnetischem Material miteinander kombiniert sind, um die dritte magnetische Struktur zu bilden, die eine quadratische Hohlröhrenform aufweist, die an einem Umfang der zweiten Ausrichtungskomponente angebracht ist.

3. Verbindungsstruktur für optischen Stecker nach Anspruch 1 oder 2, wobei
die zweite magnetische Struktur zwei oder mehr Elemente aus weichmagnetischem Material umfasst, wobei die zwei oder mehr Elemente aus weichmagnetischem Material an einem Umfang der zweiten Ausrichtungskomponente angeordnet sind und über einen Spalt, der mit Luft oder einem nichtmagnetischen Material gefüllt ist, voneinander getrennt sind.

4. Verbindungsstruktur für optischen Stecker nach einem der Ansprüche 1 bis 3, ferner umfassend
eine vierte magnetische Struktur (80, 81), die aus einem weichmagnetischen Material hergestellt ist und auf einer Endflächenseite gegenüber einer Verbindungsendfläche der dritten magnetischen Struktur mit der zweiten magnetischen Struktur angeordnet ist.

5. Verbindungsstruktur für optischen Stecker nach Anspruch 4, wobei
die vierte magnetische Struktur zwei oder mehr Elemente aus weichmagnetischem Material umfasst, wobei die zwei oder mehr Elemente aus hartmagnetischem Material miteinander kombiniert sind, um die vierte magnetische Struktur zu bilden, die eine quadratische Hohlröhrenform aufweist, die an einem Umfang der zweiten Ausrichtungskomponente angebracht ist.

6. Verbindungsstruktur für optischen Stecker nach einem der Ansprüche 1 bis 5, wobei
die erste und die zweite Ausrichtungskomponente und die erste und die zweite magnetische Struktur Positionierungsstrukturen zum Bestimmen einer Positionsbeziehung zwischen der ersten Ausrichtungskomponente und der ersten magnetischen Struktur bzw. einer Positionsbeziehung zwischen der zweiten Ausrichtungskomponente und der zweiten magnetischen Struktur aufweisen.

7. Verbindungsstruktur für optischen Stecker nach einem der Ansprüche 1 bis 5, wobei
die zweite magnetische Struktur integral mit der zweiten Ausrichtungskomponente geformt ist.

8. Verbindungsstruktur für optischen Stecker, umfassend:
einen ersten optischen Stecker (9a), der an einer Spitze einer ersten optischen Faser (5a) angebracht ist, wobei der erste optische Stecker eine erste Ausrichtungskomponente (60a), die konfiguriert ist, um die erste optische Faser zu fixieren, und eine erste magnetische Struktur (90a), die aus einem weichmagnetischen Material hergestellt und mit der ersten Ausrichtungskomponente integriert ist, beinhaltet;
einen zweiten optischen Stecker (9b), der an einer Spitze einer zweiten optischen Faser (5b) angebracht und mit dem ersten optischen Stecker verbindbar ist, wobei der zweite optische Stecker eine zweite Ausrichtungskomponente (60b), die konfiguriert ist, um die zweite optische Faser zu fixieren, und eine zweite magnetische Struktur (90b), die aus einem weichmagnetischen Material hergestellt und mit der zweiten Ausrichtungskomponente integriert ist, beinhaltet; und
eine dritte magnetische Struktur (100, 101), die aus einem hartmagnetischen Material hergestellt ist, wobei die dritte magnetische Struktur derart angeordnet ist, dass die erste magnetische Struktur und die zweite magnetische Struktur miteinander verbunden sind, wenn der erste optische Stecker mit dem zweiten optischen Stecker verbunden ist,
wobei
die erste und die zweite magnetische Struktur derart positioniert sind, dass Verbindungsendflächen der ersten und der zweiten Ausrichtungskomponente, die einander gegenüberliegen, in Bezug auf Verbindungsendflächen der ersten und der zweiten magnetischen Struktur, die einander gegenüberliegen, vorstehen,
die dritte magnetische Struktur zwei oder mehr Elemente aus hartmagnetischem Material umfasst, wobei die zwei oder mehr Elemente aus hartmagnetischem Material miteinander kombiniert sind, um die dritte magnetische Struktur zu bilden, die eine quadratische Hohlröhrenform aufweist, die an Umfängen der Verbindungsendflächen der ersten und der zweiten Ausrichtungskomponente angebracht ist,
**dadurch gekennzeichnet, dass**
die dritte magnetische Struktur (100, 101) entfernbar ist, um die Verbindung zwischen dem ersten optischen Stecker und dem zweiten optischen Stecker zu lösen.

9. Verbindungsstruktur für optischen Stecker, umfassend:
einen ersten optischen Stecker (2a), der an einer Spitze einer ersten optischen Faser (1a) angebracht ist, wobei der erste optische Stecker eine erste Ausrichtungskomponente (20a), die konfiguriert ist, um die erste optische Faser zu fixieren, und eine erste magnetische Struktur (22a), die aus einem weichmagnetischen Material hergestellt und mit der ersten Ausrichtungskomponente integriert ist, beinhaltet;
einen zweiten optischen Stecker (2b), der an einer Spitze einer zweiten optischen Faser (1b) angebracht und mit dem ersten optischen Stecker verbindbar ist, wobei der zweite optische Stecker eine zweite Ausrichtungskomponente (20b), die konfiguriert ist, um die zweite optische Faser zu fixieren, beinhaltet; und
eine zweite magnetische Struktur (40, 41), die an einem Umfang der zweiten Ausrichtungskomponente angeordnet ist, wobei
die zweite magnetische Struktur zwei oder mehr Elemente aus hartmagnetischem Material umfasst, wobei die zwei oder mehr Elemente aus hartmagnetischem Material miteinander kombiniert sind, um die zweite magnetische Struktur zu bilden, die eine quadratische Hohlröhrenform aufweist, die an einem Umfang der zweiten Ausrichtungskomponente angebracht ist,
**dadurch gekennzeichnet, dass**
mindestens eine von der zweiten Ausrichtungskomponente und der zweiten magnetischen Struktur eine Positionierungsstruktur zum Bestimmen einer Positionsbeziehung zwischen der zweiten Ausrichtungskomponente und der zweiten magnetischen Struktur aufweist, und
die zweite magnetische Struktur (40, 41) entfernbar ist, um die Verbindung zwischen dem ersten optischen Stecker und dem zweiten optischen Stecker zu lösen.

## Revendications

1. Structure de connexion de connecteur optique comportant :
un premier connecteur optique (2a) fixé à un bout d'une première fibre optique (1a), le premier connecteur optique incluant un premier composant d'alignement (20a) configuré pour fixer la première fibre optique, et une première structure magnétique (22a) constituée d'un matériau magnétique doux et solidaire du premier composant d'alignement ;
un deuxième connecteur optique (2b) fixé à un bout d'une deuxième fibre optique (1b) et apte à être connecté au premier connecteur optique, le deuxième connecteur optique incluant un deuxième composant d'alignement (20b) configuré pour fixer la deuxième fibre optique, et une deuxième structure magnétique (22b) constituée d'un matériau magnétique doux et solidaire du deuxième composant d'alignement ; et
une troisième structure magnétique (40, 41) constituée d'un matériau magnétique dur, la deuxième structure magnétique incluant une deuxième face d'extrémité de connexion (24b) opposée à une première face d'extrémité de connexion (24a) de la première structure magnétique et une troisième face d'extrémité opposée à la deuxième face d'extrémité de connexion, et la troisième structure magnétique disposée sur un côté de la troisième face d'extrémité
**caractérisée en ce que**
la deuxième structure magnétique (22b) présente une longueur plus courte dans une direction longitudinale de la fibre optique qu'une longueur de la première structure magnétique ; et
la troisième structure magnétique (40, 41) est amovible afin de libérer la connexion entre le premier connecteur optique et le deuxième connecteur optique.

2. Structure de connexion de connecteur optique selon la revendication 1, dans laquelle
la troisième structure magnétique comporte deux éléments en matériau magnétique dur ou plus, les deux éléments en matériau magnétique dur ou plus étant combinés les uns avec les autres pour former la troisième structure magnétique présentant une forme de tube creux carré qui est fixée à une périphérie du deuxième composant d'alignement.

3. Structure de connexion de connecteur optique selon la revendication 1 ou 2, dans laquelle
la deuxième structure magnétique comporte deux éléments en matériau magnétique doux ou plus, les deux éléments en matériau magnétique doux ou plus étant disposés à une périphérie du deuxième composant d'alignement et séparés les uns des autres par l'intermédiaire d'un espace rempli d'air ou d'un matériau non magnétique.

4. Structure de connexion de connecteur optique selon l'une quelconque des revendications 1 à 3, comportant en outre
une quatrième structure magnétique (80, 81) constituée d'un matériau magnétique doux et disposée sur un côté de face d'extrémité opposé à une face d'extrémité de connexion de la troisième structure magnétique avec la deuxième structure magnétique.

5. Structure de connexion de connecteur optique selon la revendication 4, dans laquelle
la quatrième structure magnétique comporte deux éléments en matériau magnétique doux ou plus, les deux éléments en matériau magnétique dur ou plus étant combinés les uns avec les autres pour former la quatrième structure magnétique présentant une forme de tube creux carré qui est fixée à une périphérie du deuxième composant d'alignement.

6. Structure de connexion de connecteur optique selon l'une quelconque des revendications 1 à 5, dans laquelle
les premier et deuxième composants d'alignement et les première et deuxième structures magnétiques présentent des structures de positionnement pour la détermination d'une relation de position entre le premier composant d'alignement et la première structure magnétique et d'une relation de position entre le deuxième composant d'alignement et la deuxième structure magnétique, respectivement.

7. Structure de connexion de connecteur optique selon l'une quelconque des revendications 1 à 5, dans laquelle
la deuxième structure magnétique est moulée de manière solidaire avec le deuxième composant d'alignement.

8. Structure de connexion de connecteur optique comportant :
un premier connecteur optique (9a) fixé à un bout d'une première fibre optique (5a), le premier connecteur optique incluant un premier composant d'alignement (60a) configuré pour fixer la première fibre optique, et une première structure magnétique (90a) constituée d'un matériau magnétique doux et solidaire du premier composant d'alignement ;
un deuxième connecteur optique (9b) fixé à un bout d'une deuxième fibre optique (5b) et apte à être connecté au premier connecteur optique, le deuxième connecteur optique incluant un deuxième composant d'alignement (60b) configuré pour fixer la deuxième fibre optique, et une deuxième structure magnétique (90b) constituée d'un matériau magnétique doux et solidaire du deuxième composant d'alignement ; et
une troisième structure magnétique (100, 101) constituée d'un matériau magnétique dur, la troisième structure magnétique étant disposée de sorte que la première structure magnétique et la deuxième structure magnétique soient connectées l'une à l'autre lorsque le premier connecteur optique est connecté au deuxième connecteur optique, dans laquelle
les première et deuxième structures magnétiques sont positionnées de sorte que les faces d'extrémité de connexion des premier et deuxième composants d'alignement, qui sont opposées l'une à l'autre, fassent saillie par rapport aux faces d'extrémité de connexion des première et deuxième structures magnétiques, qui sont opposées l'une à l'autre,
la troisième structure magnétique comporte deux éléments en matériau magnétique dur ou plus, les deux éléments en matériau magnétique dur ou plus étant combinés les uns avec les autres pour former la troisième structure magnétique présentant une forme de tube creux carré qui est fixée aux périphéries des faces d'extrémité de connexion des premier et deuxième composants d'alignement, **caractérisée en ce que**
la troisième structure magnétique (100, 101) est amovible afin de libérer la connexion entre le premier connecteur optique et le deuxième connecteur optique.

9. Structure de connexion de connecteur optique comportant :
un premier connecteur optique (2a) fixé à un bout d'une première fibre optique (1a), le premier connecteur optique incluant un premier composant d'alignement (20a) configuré pour fixer la première fibre optique, et une première structure magnétique (22a) constituée d'un matériau magnétique doux et solidaire du premier composant d'alignement ;
un deuxième connecteur optique (2b) fixé à un bout d'une deuxième fibre optique (1b) et apte à être connecté au premier connecteur optique, le deuxième connecteur optique incluant un deuxième composant d'alignement (20b) configuré pour fixer la deuxième fibre optique ; et
une deuxième structure magnétique (40, 41) disposée à une périphérie du deuxième composant d'alignement, dans laquelle
la deuxième structure magnétique comporte deux éléments en matériau magnétique dur ou plus, les deux éléments en matériau magnétique dur ou plus étant combinés les uns avec les autres pour former la deuxième structure magnétique présentant une forme de tube creux carré qui est fixée à une périphérie du deuxième composant d'alignement,
**caractérisée en ce que**
au moins l'un parmi le deuxième composant d'alignement et la deuxième structure magnétique présente une structure de positionnement pour la détermination d'une relation de position entre le deuxième composant d'alignement et la deuxième structure magnétique, et
la deuxième structure magnétique (40, 41) est amovible afin de libérer la connexion entre le premier connecteur optique et le deuxième connecteur optique.
